# EUROPEAN PATENT APPLICATION

(11) **EP 2 180 024 A1**
(43) Date of publication of application: **28.04.2010**
(21) Application number: 08792503.8
(22) Date of filing: 15.08.2008
(51) Int. Cl.: C09D 201/00, C08K 5/057, C08L 101/10, C09D 7/12, C09D 143/04, C09D 183/00, F28F 19/04

(54) **HYDROPHILIC FILM-FORMING COMPOSITION, SPRAY COMPOSITION, AND HYDROPHILIC MEMBER USING THE SAME**

(30) Priority: 17.08.2007 JP 2007212695; 25.03.2008 JP 2008079322
(71) Applicant: Fujifilm Corporation, Tokyo 106-0031 (JP)
(72) Inventor: YAMASAKI, Sumiaki, Minami-Ashigara-shi Kanagawa (JP); TANAKA, Satoshi, Minami-Ashigara-shi Kanagawa (JP); MURAYAMA, Yuichiro, Odawara-shi Kanagawa (JP); KONDO, Yoshiaki, Odawara-shi Kanagawa (JP)
(74) Representative: HOFFMANN EITLE
(86) International application number: PCT/JP2008/064657
(87) International publication number: WO 2009/025247

(57) **Abstract**

A composition for forming a hydrophilic film, comprising (A) a hydrophilic polymer having a silane coupling group at the terminal or on the side chain of the polymer, the polymer having a specific structure, and (B) a metal complex catalyst; a spray composition; and a hydrophilic member provided with the composition by spray coating. A composition for the formation of a hydrophilic film, ensuring that a hydrophilic coating excellent in durability, antifouling property, water resistance and the like can be easily formed while keeping hydrophilicity and the coating workability is excellent, and a hydrophilic member using the composition are provided.

## Description

### TECHNICAL FIELD

The present invention relates to a composition for forming a hydrophilic film, a spray composition, and a hydrophilic member. More specifically, the present invention relates to an aerosol composition for forming a hydrophilic film, ensuring that a hydrophilic coating excellent in durability, antifouling property, water resistance and the like can be easily formed while keeping hydrophilicity and the coating workability is excellent, and a hydrophilic member using the composition.

### BACKGROUND ART

A product or member having a resin film surface is being utilized in a wide range of fields and is processed according to the purpose to impart a function before use. However, the surface of such a product or member is generally hydrophobic or lipophilic because of the characteristics inherent in the resin. Accordingly, oil or the like attached as a contaminant to the surface cannot be easily removed, or its accumulation sometimes causes serious deterioration in the function or property of the product or member having such a surface. In the case of a product or member that is exposed to high-humidity conditions or rainfall, attachment of a water drop to a product or member having a transparency function brings about a problem that the transmission of light is inhibited by the diffused reflection of light. In the case of a product or member having an inorganic surface such as glass or metal, the antifouling property against attachment of a contaminant such as oil is insufficient and the antifogging property against attachment of a water drop is also insufficient. Above all, the glass for automobiles or buildings is often subject to attachment of an urban soot or dust, a combustion product such as carbon black contained in an exhaust gas of automobiles or the like, or a hydrophobic contaminant such as oil/fat or components dissolved out from a sealant, or subject to attachment of a water drop, making it difficult to ensure visibility through the glass (in the case of a mirror, by reflection), and it is strongly demanded to impart an antifouling or antifogging function.

In view of the antifouling property, envisaging that the contaminant is an organic substance such as oil, it is necessary for preventing the contamination to reduce the interaction with the material surface, that is, impart hydrophilicity or oil repellency. Also, in view of the antifogging property, it is necessary to impart extensive wettability of evenly spreading the attached water drop on the surface (that is, hydrophilicity) or impart water repellency that facilitates the removal of attached water drop. For these reasons, many of antifouling or antifogging materials which are being studied at present rely on the technique of imparting hydrophilicity or water/oil repellency.
According to the conventionally proposed surface treatment method for imparting hydrophilicity, such as etching treatment or plasma treatment, the surface is hydrophilized to a high level, but this effect is temporary and the hydrophilized state cannot be maintained for a long time. A hydrophilic surface coating using a hydrophilic graft polymer has been also proposed as one of hydrophilic resins (see, for example, Non-Patent Document 1). This paper reports that the coating film has hydrophilicity to a certain extent, but the affinity for the substrate is insufficient and higher durability is demanded.

As for other members having a hydrophilic surface function, use of titanium oxide as a photocatalyst is conventionally known. This technique is based on the oxidative decomposition function and hydrophilizing function of an organic material, which are exerted upon irradiation of light. For example, a technique of forming a photocatalyst-containing layer on the surface of a substrate and thereby allowing the surface to be hydrophilized to a high level according to the photoexcitation of the photocatalyst is disclosed, and it is reported that when this technique is applied to various composites such as glass, lens, mirror, armoring material and water supply-related member, an excellent antifogging or antifouling function or the like can be imparted to the composite (see, for example, Patent Document 1). A member obtained by coating titanium oxide on the glass surface is used as a self-cleaning material on the architectural windowpane or vehicle windshield but must be exposed to sunlight for a long time so as to exert the antifouling or antifogging function, and its property is inevitably deteriorated due to contamination accumulated with long-term aging. Furthermore, the film strength is insufficient and enhancement of durability is necessary. Also, a self-cleaning film obtained by providing a titanium oxide layer on a plastic substrate is being used for a vehicle side mirror or the like but fails in having a sufficiently high film strength, and a hydrophilic material assured of higher abrasion resistance is demanded.

In order to meet these requirements, the characteristics of a sol-gel organic-inorganic hybrid film have been taken note of, and it has been found that a hydrophilic surface having a crosslinked structure formed through hydrolysis and polycondensation of a hydrophilic polymer and an alkoxide exhibits excellent antifogging and antifouling properties and good abrasion resistance (see, for example, Patent Document 2). More enhancement of adherence is required for this film.

On the other hand, as concerns the coating composition, a curable composition containing copolymerization components composed of a hydrolyzable silyl-containing vinyl-based monomer, an alcoholic hydroxyl group-containing vinyl monomer and a tertiary amino group-containing vinyl-based monomer has been proposed, and this composition exhibits good resistance against acid, water and weather and is suitable for a top coating material of automobiles (see, for example, Patent Document 3). Furthermore, a coating composition containing a hydrolysate of organosilane or a partial condensate thereof and a vinyl-based copolymer has been proposed, and this composition forms a coating film excellent in the resistance against weather and contamination (see, for example, Patent Document 4). However, the coated film obtained from such a coating composition is lipophilic and is limited in the antifouling property. Therefore, it is required to more improve the durability, antifouling property, water resistance and the like while keeping the hydrophilicity. Also, a coating composition capable of easily forming a hydrophilic coating and assured of excellent coating workability is being demanded.
Patent Document 1: International Publication No. 96/29375, pamphlet
Patent Document 2: JP-A-2002-361800 (the term "JP-A" as used herein means an "unexamined published Japanese patent application")
Patent Document 3: Japanese Patent No. 3,412,916
Patent Document 4: JP-A-10-273623
Non-Patent Document 1: Newspaper, The Chemical Daily, article dated January 30, 1995

### DISCLOSURE OF THE INVENTION

### PROBLEMS THAT THE INVENTION IS TO SOLVE

An object of the present invention is to provide a composition for forming a hydrophilic film, ensuring that a hydrophilic coating excellent in durability, antifouling property, water resistance and the like can be easily formed while keeping hydrophilicity and the coating workability is excellent, a spray composition and a hydrophilic member using the composition.

### MEANS FOR SOLVING THE PROBLEMS

The present invention is as follows.
[1] A composition for forming a hydrophilic film, including the following components (A) and (B):
   (A) a hydrophilic polymer having a silane coupling group at the terminal or on the side chain of the polymer, and
   (B) a metal complex catalyst.
[2] A spray composition including the components (A) and (B).
[3] The composition as described in [1] or [2], wherein the composition for forming a hydrophilic film further includes:
   (C) at least one of an alkoxide compound containing an element selected from Si, Ti, Zr and Al and a partial hydrolysis condensate thereof.
[4] The composition as described in [3], wherein the viscosity of the (C) at least one of an alkoxide compound containing an element selected from Si, Ti, Zr and Al and a partial hydrolysis condensate thereof is 2 mPa·s or more at 20°C.
[5] The composition as described in any one of [1] to [4], wherein the (A) hydrophilic polymer having a silane coupling group at the terminal or on the side chain of the polymer is at least one of
   (A-1) a hydrophilic polymer having a structural unit represented by the following formula (ii) and having a partial structure represented by the following formula (i) at the terminal of the polymer chain; and
   (A-2) a hydrophilic polymer having a structural unit represented by the following formula (iii) and a structural unit represented by the following formula (iv):

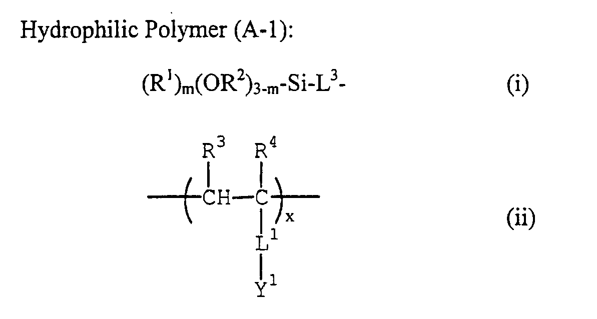

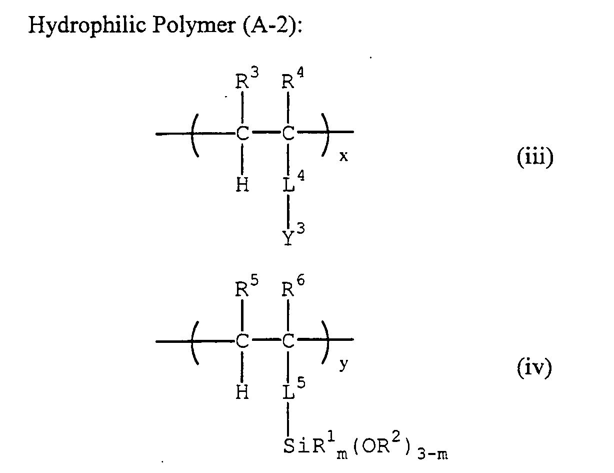

wherein R¹, R², R³, R⁴, R⁵ and R⁶ each independently represents a hydrogen atom or a hydrocarbon group having a carbon number of 1 to 8; m represents 0, 1 or 2; x and y define the compositional ratio, x is 0<x<100, y is 0<y<100; L¹, L³ and L⁴ each independently represents a single bond or an organic linking group; L⁵ represents a single bond or a polyvalent organic linking group having one or more structures selected from the group consisting of -CONH-, -NHCONH-, -OCONH-, -SO₂NH- and -SO₃-; and Y¹ and Y³ each independently represents -OH, -ORₐ, -CORₐ, -CO₂Rₑ, -CON(Rₐ)(R_{b}), -N(Rₐ)(R_{b}), - NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, - NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), - OPO₃(Rₑ)(R_{f}) or -PO₃(R_{d})(Rₑ), wherein Rₐ, R_{b} and R_{c} each independently represents a hydrogen atom or a linear, branched or cyclic alkyl group; R_{d} represents a linear, branched or cyclic alkyl group; Rₑ and R_{f} each independently represents a hydrogen atom, a linear, branched or cyclic alkyl group, an alkali metal, an alkaline earth metal or an onium; and Rg represents a linear, branched or cyclic alkyl group, a halogen atom, an inorganic anion or an organic anion.
[6] The composition as described in any one of [1] to [5], wherein (B) the metal complex catalyst is composed of a metal element selected from Groups 2A, 3B, 4A and 5A of the Periodic Table and an oxo or hydroxyoxygen compound selected from a β-diketone, a ketoester, a hydroxycarboxylic acid or an ester thereof, an aminoalcohol and an enolic active hydrogen compound.
[7] The composition as described in any one of [1] to [6], further including (D) a colloidal silica.
[8] A hydrophilic member in which the composition as described in any one of [1] to [7] is applied to a substrate by a spray coating.
[9] The composition as described in any one of [1] to [7], wherein the composition for forming a hydrophilic film includes the hydrophilic polymer (A-1) and the hydrophilic polymer (A-2) and the mass ratio (hydrophilic polymer (A-1)/hydrophilic polymer (A-2)) between the hydrophilic polymer (A-1) and the hydrophilic polymer (A-2) is from 50/50 to 5/95.

[10] A hydrophilic member in which the composition as described in [9] is applied by a spray coating.
[11] A fin material coated with the composition as described in any one of [1] to [7].
[12] An aluminum-made fin material, wherein the fin material as described in [11] is made of aluminum.
[13] A heat exchanger using the aluminum-made fin material as described in [12].
[14] An air conditioner using the heat exchanger described in [13].

### ADVANTAGE OF THE INVENTION

According to the present invention, a composition for forming a hydrophilic film, ensuring that a hydrophilic coating excellent in durability, antifouling property, water resistance and the like can be easily formed while keeping hydrophilicity and the coating workability is excellent, a spray composition and a hydrophilic member using the composition, can be provided.

### BEST MODE FOR CARRYING OUT THE INVENTION

The present invention is described in detail below.

The composition for forming a hydrophilic film of the present invention contains the components (A) and (B):
(A) a hydrophilic polymer having a silane coupling group at the terminal or on the side chain of the polymer, and
(B) a metal complex catalyst.

(A) Hydrophilic polymer having a silane coupling group at the terminal or on the side chain of the polymer
(A-1) Hydrophilic polymer having a silane coupling group at the terminal of the polymer:

In the hydrophilic polymer having a silane coupling group at the terminal of the polymer for use in the present invention, the logP of the monomer as its constituent unit is preferably from -3 to 2, more preferably from -2 to 0. Within this range, good hydrophilicity is obtained.

Here, logP is a logarithm of an octanol/water partition coefficient (P) value of a compound computed using a software, PCModels, developed by Medicinal Chemistry Project, Pomona College, Claremont, California and available from Daylight Chemical Information System Inc.

It is presumed that by virtue of using such a hydrophilic polymer having a silane coupling group at the polymer terminal, a crosslinked structure involving Si(OR)₄ is formed by an interaction between the silane coupling group of the hydrophilic polymer and the crosslinking component as well as by an interaction of the silane coupling groups of the hydrophilic polymer with each other and thanks to the firm crosslinked structure, enhancement of the strength and durability of a hydrophilic film is achieved. Also, the moiety having a hydrophilic group is made free due to the presence of a silane coupling group at the terminal, and the hydrophilicity is more enhanced.

In the present invention, from the standpoint of more enhancing the characteristics of a hydrophilic film, the (A) polymer having a silane coupling group at the terminal or on the side chain of the polymer preferably contains (A-1) a hydrophilic polymer having a structural unit represented by the following formula (ii) and having a partial structure represented by the following formula (i) at the terminal of the polymer chain:

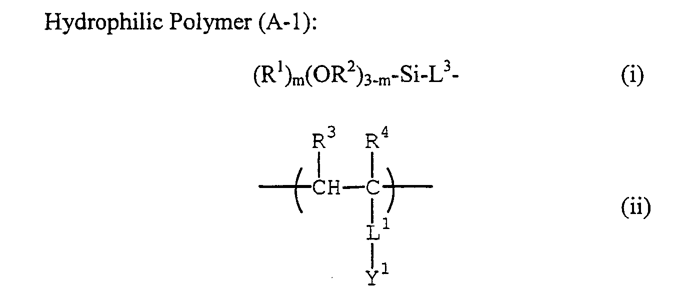

The hydrophilic polymer (A-1) having a structural unit represented by formula (ii) and having a partial structure represented by formula (i) at the terminal of the polymer chain is sufficient if it has a silane coupling group represented by the structural unit (i) at least at either one of both terminals of the polymer unit represented by the structural unit (ii), and another terminal may have this functional group or may have a hydrogen atom or a functional group having a polymerization initiating ability.
In formulae (i) and (ii), m represents 0, 1 or 2, and R¹, R², R³ and R⁴ each independently represents a hydrogen atom or a hydrocarbon group (preferably having a carbon number of 1 to 8). Examples of the hydrocarbon group include an alkyl group and an aryl group, and a linear, branched or cyclic alkyl group (preferably having a carbon number of 8 or less) is preferred. Specific examples thereof include a methyl group, an ethyl group, a propyl group, a butyl group, a pentyl group, a hexyl group, a heptyl group, an octyl group, an isopropyl group, an isobutyl group, an s-butyl group, a tert-butyl group, an isopentyl group, a neopentyl group a 1-methylbutyl group, an isohexyl group, a 2-ethylhexyl group, a 2-methylhexyl group and a cyclopentyl group.
In view of the effect and easy availability, R¹ to R⁶ each is preferably a hydrogen atom, a methyl group or an ethyl group.

These hydrocarbon groups may further have a substituent.
In the case where the alkyl group has a substituent, the substituted alkyl group is composed by bonding the substituent to an alkylene group, and the substituent used here is a monovalent nonmetallic atomic group excluding hydrogen.
Preferred examples thereof include a halogen atom (e.g., -F, -Br, -Cl, -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group,

an N-arylureido group, an N'-alkyl-N=alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-allcylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group,

an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) and a conjugate base group thereof (hereinafter referred to as a "sulfonato group"), an alkoxysulfonyl group, an aryloxysulfonyl group, a sulfinamoyl group, an N-alkylsulfinamoyl group, an N,N-dialkylsulfmamoyl group, an N-arylsulfinamoyl group, an N,N-diarylsulfmamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-allcyl-N-arylsulfamoyl group, a phosphono group (-PO₃H₂) and a conjugate base group thereof (hereinafter referred to as a "phosphonato group"), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugate base group thereof (hereinafter referred to as an "alkylphosphonato group"), a monoarylphosphono group (-PO₃H(aryl)) and a conjugate base group thereof (hereinafter referred to as an "arylphosphonato group"), a phosphonoxy group (-OPO₃H₂) and a conjugate base group thereof (hereinafter referred to as a "phosphonatoxy group"), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) and a conjugate base group thereof (hereinafter referred to as an "alkylphosphonatoxy group"), a monoarylphosphonoxy group (-OPO₃H(aryl)) and a conjugate base group thereof (hereinafter referred to as an "arylphosphonatoxy group"), a morpholino group, a cyano group, a nitro group, an aryl group, an alkenyl group and an alkynyl group.

In these substituents, specific examples of the alkyl group include those described for the alkyl group above, and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group and a phosphonatophenyl group. Examples of the alkenyl group include a vinyl group, a 1-propenyl group, a 1-butenyl group, a cinnamyl group and a 2-chloro-1-ethenyl group, and examples of the alkynyl group include an ethynyl group, a 1-propynyl group, a 1-butynyl group and a trimethylsilylethynyl group. Examples of G¹ in the acyl group (G¹CO⁻) include hydrogen and the above-described alkyl and aryl groups.

Among these substituents, more preferred are a halogen atom (e.g., -F, -Br, -Cl, - I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group and an alkenyl group.

The alkylene group in the substituted alkyl group includes a divalent organic residue resulting from removal of any one hydrogen atom on the above-described alkyl group having a carbon number of 1 to 20 and is preferably a linear alkylene group having a carbon number of 1 to 12, a branched alkylene group having a carbon number of 3 to 12 or a cyclic alkylene group having a carbon number of 5 to 10. Specific preferred examples of the substituted alkyl group obtained by combining the substituent and an alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group and a 3-butynyl group.

L¹ represents a single bond or an organic linking group. The organic linking group as used herein indicates a polyvalent linking group composed of nonmetallic atoms, specifically, composed of from 0 to 60 carbon atoms, from 0 to 10 nitrogen atoms, from 0 to 50 oxygen atoms, from 0 to 100 hydrogen atoms and from 0 to 20 sulfur atoms. More specific examples of the linking group include those composed of the following structural units individually or in combination.

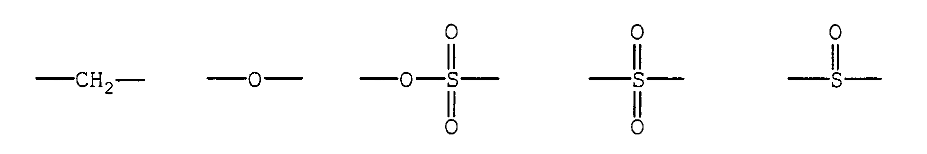

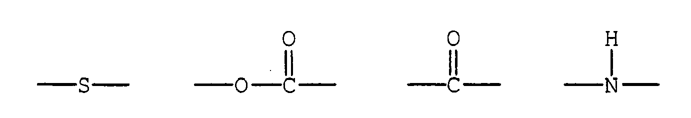

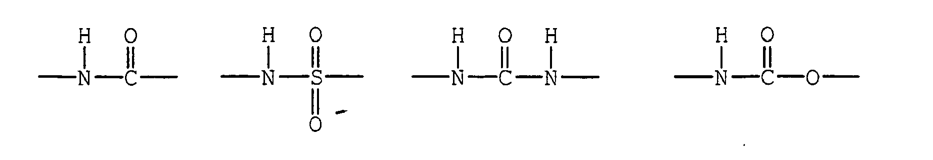

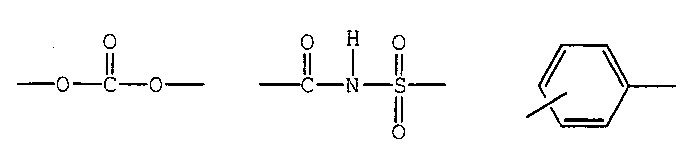

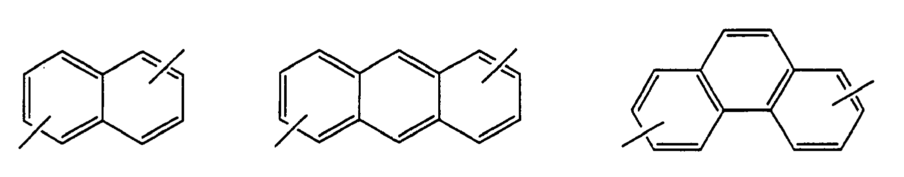

L³ represents a single bond or an organic linking group. The organic linking group as used herein indicates a polyvalent linking group composed of a nonmetallic atom, and specific examples thereof are the same as those described above for L¹. Above all, a structure of -(CH₂)ₙ-S- (n is an integer of 1 to 8) is preferred.

Each Y¹ independently represents -OH, -ORₐ, -CORₐ, -CO₂Rₑ, - CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), - SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ), wherein Rₐ, R_{b} and R_{c} each independently represents a hydrogen atom or a linear, branched or cyclic alkyl group having a carbon number of 1 to 8, R_{d} represents a linear, branched or cyclic alkyl group having a carbon number of 1 to 8, Rₑ and R_{f} each independently represents a hydrogen atom, a linear, branched or cyclic alkyl group having a carbon number of 1 to 8, an alkali metal, an alkaline earth metal or an onium, and R_{g} represents a linear, branched or cyclic alkyl group having a carbon number of 1 to 8, a halogen atom, an inorganic anion or an organic anion. As regards -CON(Rₐ)(R_{b}), -OCON(Rₐ)(R_{b}), -NHCON(Rₐ)(R_{b}), - SO₂N(Rₐ)(R_{b}), -PO₃(Rₑ)(R_{f}), -OPO₃(Rₑ)(R_{f}), -PO₂(R_{d})(Rₑ), -N(Rₐ)(R_{b})(R_{c}) and -N(Rₐ)(R_{b})(R_{c})(R_{g}), Rₐ to Rg may combine with each other to form a ring, and the ring formed may be a heterocycle containing a heteroatom such as oxygen atom, sulfur atom and nitrogen atom. Rₐ to Rg each may further have a substituent, and examples of the substituent which can be introduced here include those described above as the substituent that can be introduced when R¹ to R⁶ are an alkyl group.

Specific preferred examples of Rₐ, R_{b} and R_{c} include a hydrogen atom, a methyl group, an ethyl group, a propyl group, a butyl group, a pentyl group, a hexyl group, a heptyl group, an octyl group, an isopropyl group, an isobutyl group, an s-butyl group, a tert-butyl group, an isopentyl group, a neopentyl group, a 1-methylbutyl group, an isohexyl group, a 2-ethylhexyl group, a 2-methylhexyl group and a cyclopentyl group.
Specific preferred examples of R_{d} include a methyl group, an ethyl group, a propyl group, a butyl group, a pentyl group, a hexyl group, a heptyl group, an octyl group, an isopropyl group, an isobutyl group, an s-butyl group, a tert-butyl group, an isopentyl group, a neopentyl group, a 1-methylbutyl group, an isohexyl group, a 2-ethylhexyl group, a 2-methylhexyl group and a cyclopentyl group.
Specific examples of Rₑ and R_{f} include, in addition to the alkyl group described for Rₐ to R_{d}, a hydrogen atom, an alkali metal such as lithium, sodium and potassium, an alkaline earth metal such as calcium and barium, and an onium such as ammonium, iodonium and sulfonium.
Specific examples of Rg include, in addition to the alkyl group described for Rₐ to R_{d}, a hydrogen atom, a halogen atom such as fluorine atom, chlorine atom and bromine atom, an organic anion such as nitrate anion, sulfate anion, tetrafluoroborate anion and hexafluorophosphate anion, and an organic anion such as methanesulfonate anion, trifluoromethanesulfonate anion, nonafluorobutanesulfonate anion and p-toluenesulfonate anion.
Specific preferred examples of Y¹ and Y² include -CO₂⁻Na⁺, -CONH₂, -SO₃⁻Na⁺, - SO₂NH₂ and -PO₃H₂.

The molecular weight of the specific hydrophilic polymer (A-1) is preferably from 1,000 to 100,000, more preferably from 1,000 to 50,000, and most preferably from 1,000 to 30,000.

The specific hydrophilic polymer (A-1) for use in the present invention can be synthesized by radical polymerization of the following structural unit (ii) and an arbitrary radical polymerizable monomer by using a silane coupling agent represented by the following structural formula (i) having an ability of causing chain transfer in the radial polymerization. The silane coupling agent has a chain transfer ability, so that a polymer having a silane coupling group introduced into the terminal of the polymer main chain in the radical polymerization can be synthesized.
The reaction style is not particularly limited, but a bulk reaction, a solution reaction, a suspension reaction or the like may be performed in the presence of a radical polymerization initiator or under irradiation of a high-pressure mercury lamp.

Also, in order to control the introduction amount of the structural unit represented by (i) and effectively suppress its homopolymerization with the structural unit (ii), the polymerization reaction is preferably performed by a polymerization method using a process of adding an unsaturated compound in parts or successively.
The reaction ratio of the structural unit (ii) and the arbitrary structural unit to the structural unit (i) is not particularly limited, but from the standpoint of suppressing a side reaction or raising the yield of a hydrolyzable silane compound, the ratio of the structural unit (i) and the arbitrary structural unit is preferably from 0.5 to 50 mol, more preferably from 1 to 45 mol, and most preferably from 5 to 40 mol, per mol of the structural unit (i).

These compounds are commercially available or can be easily synthesized.

As regards the radical polymerization method for synthesizing the specific hydrophilic polymer (A-1), any of conventionally known methods may be used. Specifically, general radical polymerization methods are described, for example, in Shin Kobunshi Jikken Gaku 3, Kobunshi no Gousei to Hanno 1 (New Polymer Experimentation 3. Synthesis and Reaction of Polymers 1), compiled by Polymer Society Japan, Kyoritsu Shuppan, Shin Jikken Kagaku Koza 19, Kobunshi Kagaku (I) (Lecture 19 on New Experimental Chemistry, Polymer Chemistry (I)), compiled by The Chemical Society of Japan, Maruzen, and Busshitsu Kogaku Koza, Kobunshi Gousei Kagaku (Lecture on Substance Engineering, Polymer Synthesis Chemistry), Publishing Division of Tokyo Denki University, and these methods can be applied.

The specific hydrophilic polymer (A-1) may also be a copolymer with other monomers described below. Examples of other monomers used include known monomers such as acrylic acid esters, methacrylic acid esters, acrylamides, methacrylamides, vinyl esters, styrenes, acrylic acid, methacrylic acid, acrylonitrile, maleic anhydride and maleic acid imide. By copolymerizing such monomers, various properties such as film-forming property, film strength, hydrophilicity, hydrophobicity, solubility, reactivity and stability can be improved.

Specific examples of the acrylic acid esters include methyl acrylate, ethyl acrylate, (n- or i-)propyl acrylate, (n-, i-, sec- or tert-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate and 2-(hydroxyphenylcarbonyloxy)ethyl acrylate.

Specific examples of the methacrylic acid esters include methyl methacrylate, ethyl methacrylate, (n- or i-)propyl methacrylate, (n-, i-, sec- or tert-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate and 2-(hydroxyphenylcarbonyloxy)ethyl methacrylate.

Specific examples of the acrylamides include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide and N-hydroxyethyl-N-methylacrylamide.

Specific examples of the methacrylamides include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide and N-hydroxyethyl-N-methylmethacrylamide.

Specific examples of the vinyl esters include vinyl acetate, vinyl butyrate and vinyl benzoate.
Specific examples of the styrenes include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene and carboxystyrene.

The proportion of other monomers used for the synthesis of the copolymer needs to be large enough to improve various properties, but if the proportion is excessively large, the function as a hydrophilic film may be unsatisfied and the advantage attributable to the addition of the specific hydrophilic polymer (A-1) may not be sufficiently obtained. For these reasons, the total proportion of other monomers in the specific hydrophilic polymer (A-1) is preferably 80 mass% or less, more preferably 50 mass% or less.

As for the specific hydrophilic polymer (A-1), one kind of a polymer may be used alone, or two or more kinds of polymers may be used in combination.

It is also preferred to add a hydrophilic polymer described below in combination with the specific hydrophilic polymer (A-1) in the composition.

Examples of the polymer include polymers starting from monomers such as acrylic acid esters, methacrylic acid esters, acrylamides, methacrylamides, vinyls or their hydrolysates, styrenes, acrylic acid or its salts, methacrylic acid or its salts, acrylonitrile, maleic anhydrides and maleic acid imides.
Among these monomers, preferred are monomers having an amino group, an ammonium group, a hydroxyl group, an sulfonamide group, a carboxyl group or its salt, a phosphoric acid group or its salt, a sulfonic acid salt or its salt, or an ether group, particularly, an ethylene oxy group.
Other than the polymers above, a hydrophilic polymer having a urethane bond, an amide bond or a urea bond in the main chain may also be used.

Specific examples of the acrylic acid esters include 2-hydroxyethyl acrylate, 2-hydroxypropyl acrylate, 2-hydroxypentyl acrylate, trimethylolpropane monoacrylate, pentaerythritol monoacrylate, hydroxybenzyl acrylate, dihydroxyphenethyl acrylate, furfuryl acrylate, tetrahydrofurfuryl acrylate, sulfamoylphenyl acrylate, 2-(hydroxyphenylcarbonyloxy)ethyl acrylate, diethylene glycol ethyl ether acrylate and 2-ethoxyethyl acrylate.

Specific examples of the methacrylic acid esters include 2-hydroxyethyl methacrylate, 2-hydroxypropyl methacrylate, 2-hydroxypentyl methacrylate, trimethylolpropane monomethacrylate, pentaerythritol monomethacrylate, dihydroxyphenethyl methacrylate, furfuryl methacrylate, tetrahydrofurfuryl methacrylate, sulfamoylphenyl methacrylate, 2-(hydroxyphenylcarbonyloxy)ethyl methacrylate, diethylene glycol ethyl ether methacrylate, 2-ethoxyethyl methacrylate and methoxytetraethylene glycol monomethacrylate.

Specific examples of the acrylamides include acrylamide, N-methylacrylamide, N-ethylacrylamide, N-propylacrylamide, N-butylacrylamide, N-hydroxyethylacrylamide, N-phenylacrylamide, N,N-dimethylacrylamide, N-methyl-N-phenylacrylamide and N-hydroxyethyl-N-methylacrylamide.

Specific examples of the methacrylamides include methacrylamide, N-methylmethacrylamide, N-ethylmethacrylamide, N-propylmethacrylamide, N-butylmethacrylamide, N-hydroxyethylmethacrylamide, N-(sulfamoylphenyl)methacrylamide, N-(phenylsulfonyl)methacrylamide, N,N-dimethylmethacrylamide, N-methyl-N-phenylmethacrylamide and N-hydroxyethyl-N-methylmethacrylamide.

Specific examples of the vinyls include vinyl acetate and vinylpyrrolidone.
Specific examples of the styrenes include trimethylstyrene, carboxystyrene, and styrenesulfone or its salt.

In the present invention, in view of balancing the coatability with hydrophilicity, the specific hydrophilic polymer (A-2) is used in an amount of, in terms of nonvolatile components, preferably from 5 to 50 mass%, more preferably from 5 to 30 mass%, based on the composition used for forming a hydrophilic film.

### (A-2) Hydrophilic polymer having a silane coupling group on the side chain of the polymer

In the present invention, from the standpoint of more enhancing the characteristics of a hydrophilic film, (A-2) a hydrophilic polymer having a structural unit represented by the following formula (iii) and a structural unit represented by the following formula (iv) is preferably contained as a hydrophilic polymer having a silane coupling group on the side chain of the polymer [hereinafter sometimes referred to as a "specific hydrophilic polymer (A-2)".

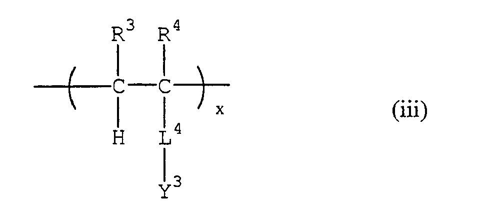

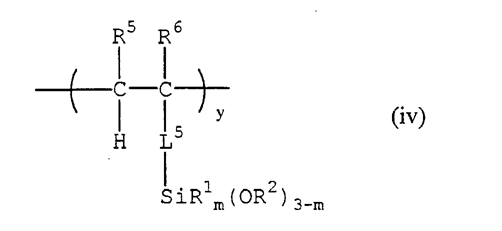

In formulae (iii) and (iv), R¹ to R⁶ have the same meanings as R¹ to R⁴ described in regard to the specific hydrophilic polymer (A-1).
In formulae (iii) and (iv), Y³ has the same meaning as Y¹ described in regard to the specific hydrophilic polymer (A-1).
In formulae (iii) and (iv), m has the same meaning as that described in regard to the specific hydrophilic polymer (A-1).

L⁴ represents a single bond or a polyvalent organic linking group. Here, the single bond indicates that the polymer main chain and X are directly bonded without a linking chain. Furthermore, the organic linking group indicates a linking group composed of nonmetallic atoms, specifically, composed of from 0 to 200 carbon atoms, from 0 to 150 nitrogen atoms, from 0 to 200 oxygen atoms, from 0 to 400 hydrogen atoms and from 0 to 100 sulfur atoms. More specific examples of the linking group include those composed of the following structural units individually or in combination.

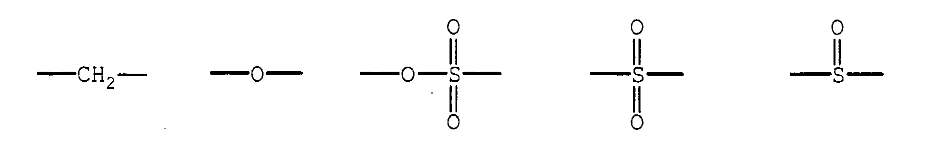

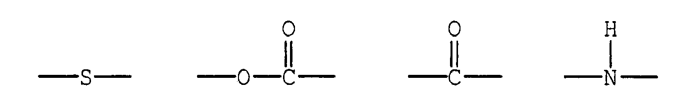

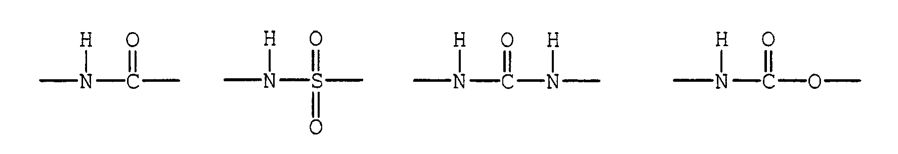

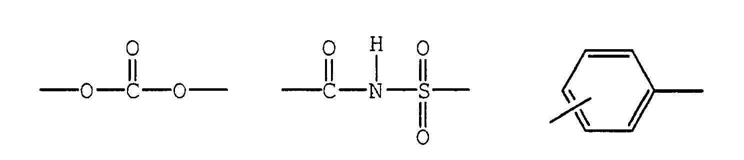

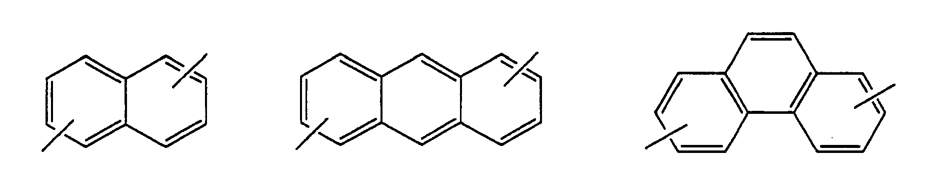

L⁴ may be formed of a polymer or an oligomer and specifically, it is preferred to contain polyacrylate, polymethacrylate, polyacrylonitrile, polyvinyl, polystyrene or the like each comprising an unsaturated double bond-based monomer. Other preferred examples include poly(oxyalkylene), polyurethane, polyurea, polyester, polyamide, polyimide, polycarbonate, polyamino acid and polysiloxane. Above all, polyacrylate, polymethacrylate, polyacrylonitrile, polyvinyl and polystyrene are preferred, and polyacrylate, polymethacrylate are more preferred.
The polymer or oligomer may be composed of one kind or two or more kinds of these structural units. Also, when L⁴ is a polymer or an oligomer, the number of constituent elements is not limited, and the molecular weight is preferably from 1,000 to 1,000,000, more preferably from 1,000 to 500,000, and most preferably from 1,000 to 200,000.

L⁵ represents a single bond or a polyvalent organic linking group having one or more structures selected from the group consisting of -CONH-, -NHCONH-, -OCONH-, - SO₂NH- and -SO₃-. In view of hydrophilicity, -CONH- is preferred.
Here, the single bond indicates that the polymer main chain and the Si atom are directly bonded without a linking group. In L⁵, two or more of the above-described structures may be present and in this case, the structures may be the same or different. In the case of containing one or more of the structures above, the other structure may be the same structure as those described for L⁴.

In formula (2), x and y define the compositional ratio, x is 0<x<100, and y is 0<y<100.
Here, as for the structural units constituting the specific hydrophilic polymer (A-2) chain, all may be the same, or a plurality of different structural units may be contained and in this case, the polymerization molar ratio of respective structural units constituting the specific hydrophilic polymer (A-2) chain is preferably in the above-described range.

The molecular weight of the specific hydrophilic polymer (A-2) is preferably from 1,000 to 1,000,000, more preferably from 1,000 to 500,000, and most preferably from 1,000 to 200,000.

The compounds used for synthesizing the specific hydrophilic polymer (A-2) of the present invention are commercially available or can be easily synthesized.
As regards the radical polymerization method for synthesizing the specific hydrophilic polymer (A-2), any of conventionally known methods may be used. Specifically, general radical polymerization methods are described, for example, in Shin Kobunshi Jikken Gaku 3, Kobunshi no Gousei to Hanno 1 (New Polymer Experimentation 3, Synthesis and Reaction of Polymers 1), compiled by Polymer Society Japan, Kyoritsu Shuppan, Shin Jikken Kagaku Koza 19, Kobunshi Kagaku (I) (Lecture 19 on New Experimental Chemistry, Polymer Chemistry (I)), compiled by The Chemical Society of Japan, Maruzen, and Busshitsu Kogaku Koza, Kobunshi Gousei Kagaku (Lecture on Substance Engineering, Polymer Synthesis Chemistry), Publishing Division of Tokyo Denki University, and these methods can be applied.

Also, the specific hydrophilic polymer (A-2) may be a copolymer with other monomers, as described in regard to the specific hydrophilic polymer (A-1). Examples of other monomers used are the same as those for the specific hydrophilic polymer (A-1).

The proportion of other monomers used for the synthesis of the copolymer needs to be large enough to improve various properties, but in order to ensure that the function as a hydrophilic film is sufficient and an adequate advantage is obtained by the addition of the specific hydrophilic polymer (A-2), the proportion is preferably not too much large. Accordingly, the total proportion of other monomers in the specific hydrophilic polymer (A-2) is preferably 80 mass% or less, more preferably 50 mass% or less.

In view of curability and hydrophilicity, the specific hydrophilic polymer (A-2) for use in the present invention is contained in an amount of preferably from 5 to 99 mass%, more preferably from 15 to 99 mass%, and most preferably from 20 to 99 mass%, based on nonvolatile components in the composition of the present invention. As for this polymer, one kind of a polymer may be used alone, or two or more kinds of polymers may be used in combination. Here, the nonvolatile component indicates components excluding a solvent that volatilizes.

Compounds 1-1 to 1-12 as examples of the specific hydrophilic polymer (A-1) suitably used in the present invention are set forth below together with the mass average molecular weight (M.W.) thereof, but the present invention is not limited thereto.

| | | |
|---|---|---|
| 1-1 | 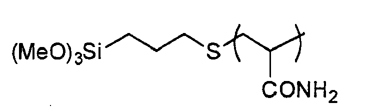 | M.W. 3,000 |
| 1-2 | 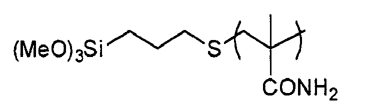 | M.W. 5,000 |
| 1-3 | 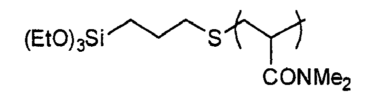 | M.W. 4,000 |
| 1-4 | 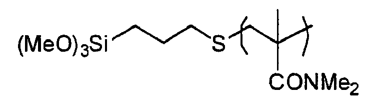 | M.W. 3,500 |
| 1-5 | 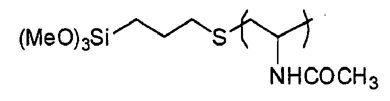 | M.W. 3,000 |
| 1-6 | 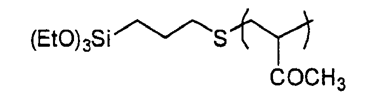 | M.W. 5,500 |
| 1-7 | 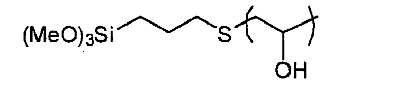 | M.W. 4,000 |
| 1-8 | 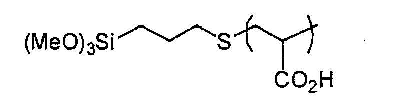 | M.W. 4,500 |
| 1-9 | 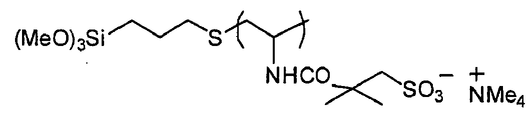 | M.W. 3,000 |
| 1-10 | 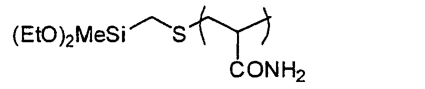 | M.W. 3,500 |
| 1-11 | 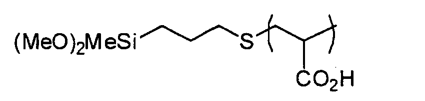 | M.W. 4,000 |
| 1-12 | 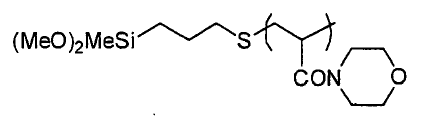 | M.W. 6,000 |

Compounds 1 to 51 as examples of the specific hydrophilic polymer (A-2) are set forth below together with the mass average molecular weight (M.W.) thereof, but the present invention is not limited thereto. In specific examples below, the polymer is a random copolymer where respective structural units shown are contained in the indicated molar ratio.

| | | |
|---|---|---|
| (1) | 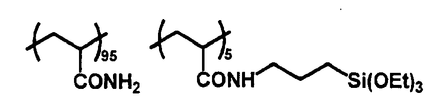 | **M.W. 8,500** |
| (2) | 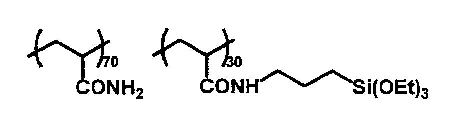 | **M.W. 9,000** |
| (3) | 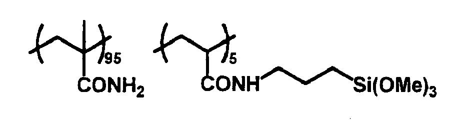 | **M.W. 12,000** |
| (4) | 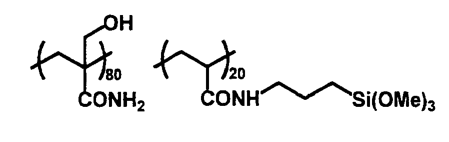 | **M.W. 10,000** |
| (5) | 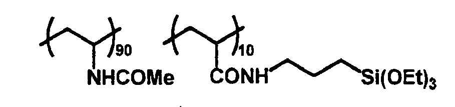 | **M.W. 7,000** |
| (6) | 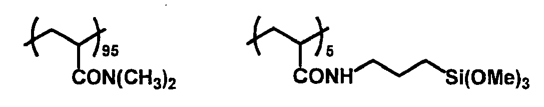 | **M.W. 9,700** |
| (7) | 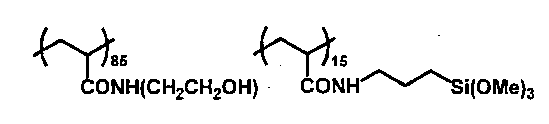 | **M.W. 15,000** |
| (8) | 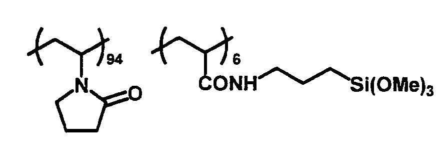 | **M.W. 7,600** |
| (9) | 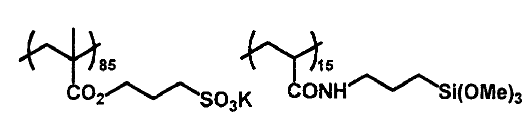 | **M.W. 20,000** |
| (10) | 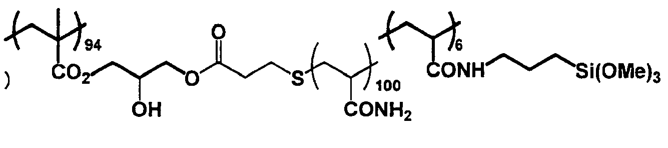 | **M.W. 25,000** |

| | | |
|---|---|---|
| (11) | 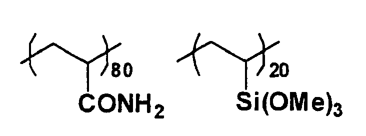 | **M.W. 6,000** |
| (12) | 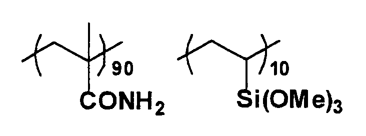 | **M.W. 7,900** |
| (13) | 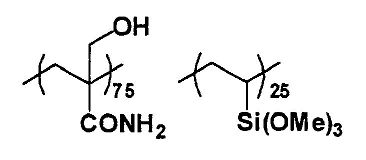 | **M.W. 9,000** |
| (14) | 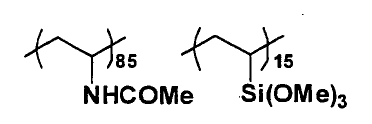 | **M.W. 8,600** |
| (15) | 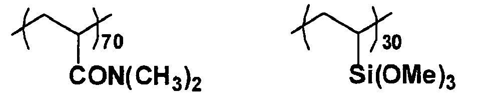 | **M.W. 10,000** |
| (16) | 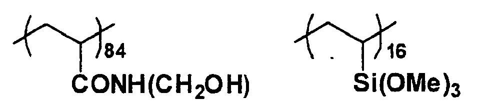 | **M.W. 15,000** |
| (17) | 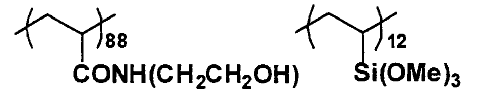 | **M.W. 30,000** |
| (18) | 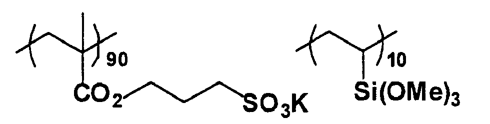 | **M.W. 50,000** |
| (19) | 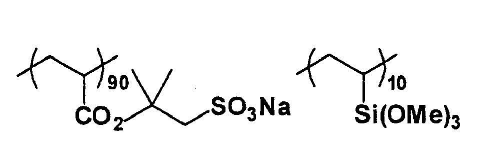 | **M.W. 36,000** |
| (20) | 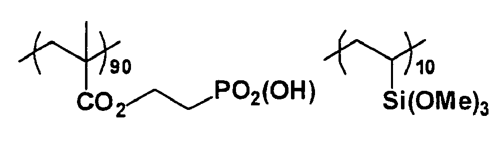 | **M.W. 28,000** |

| | | |
|---|---|---|
| (21) | 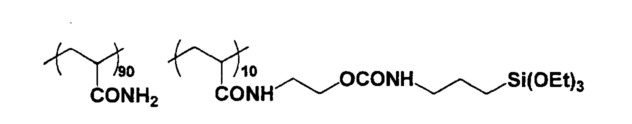 | **M.W. 15,000** |
| (22) | 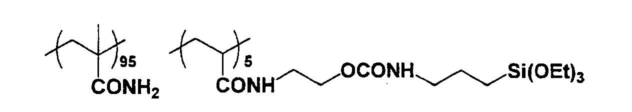 | **M.W. 20,000** |
| (23) | 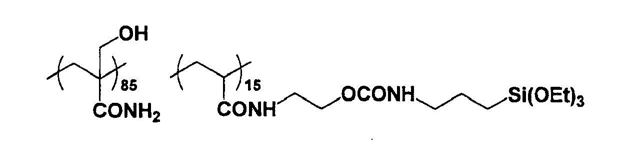 | **M.W. 13,000** |
| (24) | 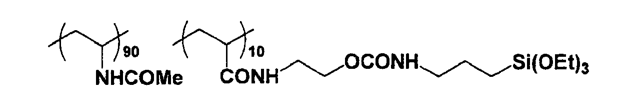 | **M.W. 25,000** |
| (25) | 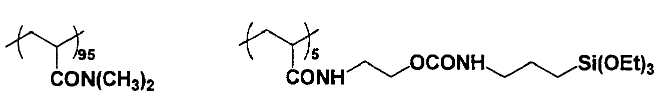 | **M.W. 35,000** |
| (26) | 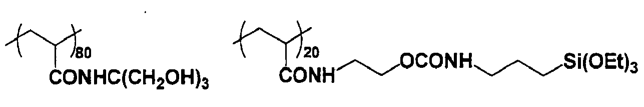 | **M.W. 43,000** |
| (27) | 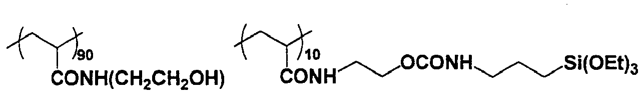 | **M.W. 23,000** |
| (28) | 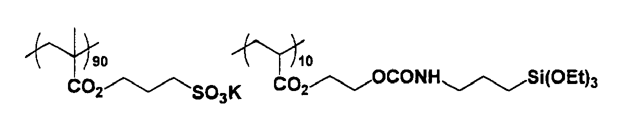 | **M.W. 50,000** |
| (29) | 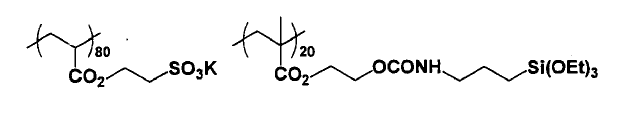 | **M.W. 36,000** |
| (30) | 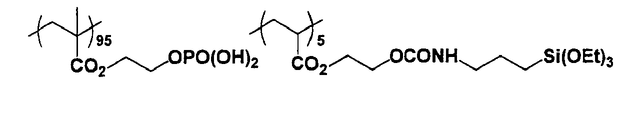 | **M.W. 40,000** |

| | | |
|---|---|---|
| (31) | 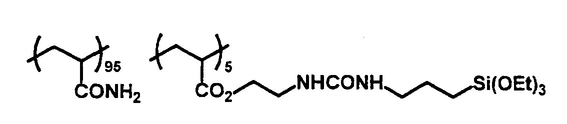 | **M.W. 20,000** |
| (32) | 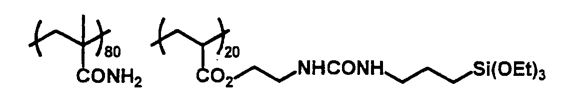 | **M.W. 9,000** |
| (33) | 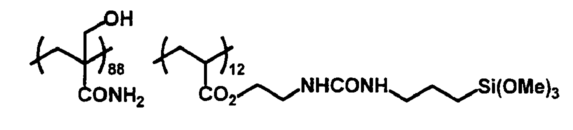 | **M.W. 105,000** |
| (34) | 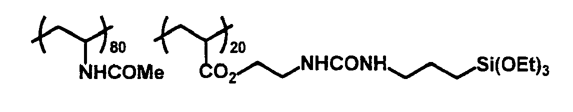 | **M.W. 80,000** |
| (35) | 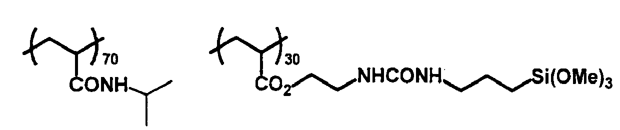 | **M.W. 62,000** |
| (36) | 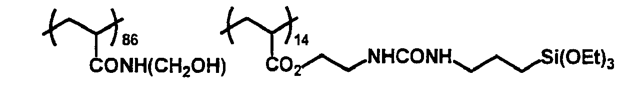 | **M.W. 23,000** |
| (37) | 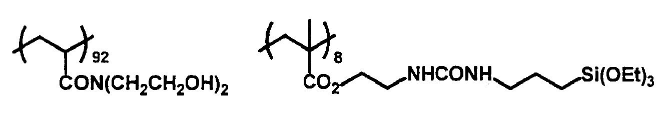 | **M.W.39,000** |
| (38) | 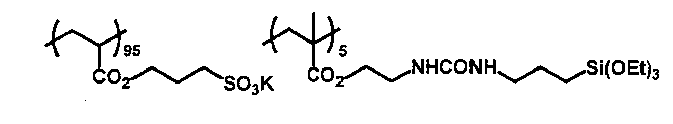 | **M.W. 20,000** |
| (39) | 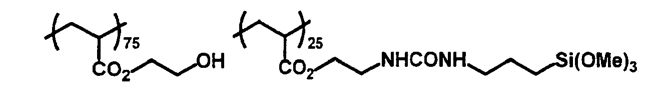 | **M.W.11,000** |
| (40) | 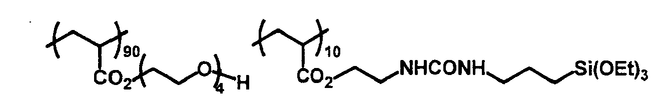 | **M.W. 70,000** |

| | | |
|---|---|---|
| (41) | 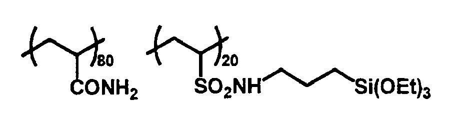 | **M.W. 30,000** |
| (42) | 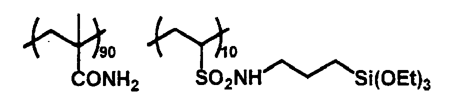 | **M.W. 15,000** |
| (43) | 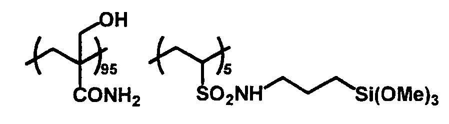 | **M.W. 25,000** |
| (44) | 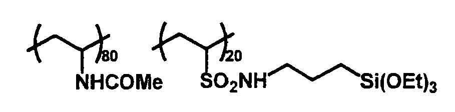 | **M.W. 180,000** |
| (45) | 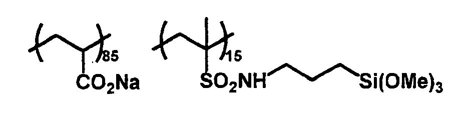 | **M.W. 52,000** |
| (46) | 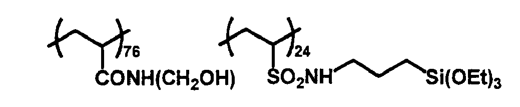 | **M.W. 25,000** |
| (47) | 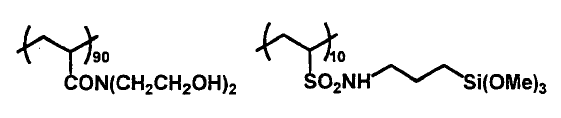 | **M.W. 60,000** |
| (48) | 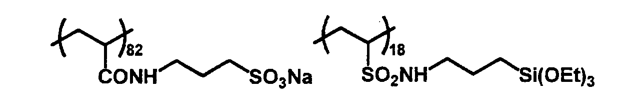 | **M.W. 8,000** |
| (49) | 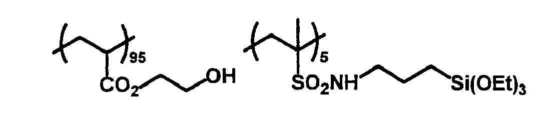 | **M.W. 200,000** |
| (50) | 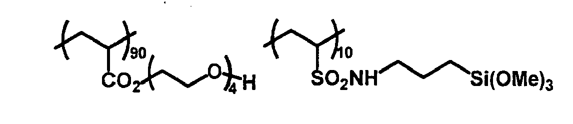 | **M.W. 97,000** |
| (51) | 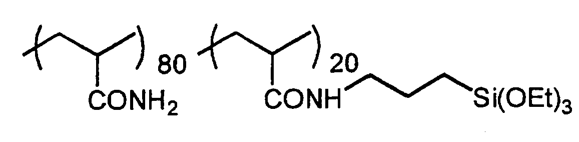 | M.W.20000 |

In view of water resistance and antifouling property, the aerosol composition for forming a hydrophilic film of the present invention preferably contains the specific hydrophilic polymer (A-1) and the specific hydrophilic polymer (A-2). It is usually considered that when the specific hydrophilic polymer (A-1) is mixed with the specific hydrophilic polymer (A-2), the adherence or water resistance may decrease, but in the present invention, the ratio (by mass) of specific hydrophilic polymer (A-1)/specific hydrophilic polymer (A-2) in the hydrophilic composition is set to a specific range as described above, whereby an unexpected effect that water resistance and antifouling property can be enhanced while maintaining hydrophilicity is obtained.
In the composition of the present invention, it is preferred that the composition for forming a hydrophilic film contains the hydrophilic polymer (A-1) and the hydrophilic polymer (A-2) and the mass ratio (hydrophilic polymer (A-1)/hydrophilic polymer (A-2)) between the hydrophilic polymer (A-1) and the hydrophilic polymer (A-2) is from 50/50 to 5/95.

The ratio is more preferably from 40/60 to 10/90.

### (B) Metal complex catalyst

The metal complex catalyst for use in the present invention can promote the hydrolysis and polycondensation of the metal alkoxide compound above and cause bonding with a hydrophilic polymer. The metal complex catalyst particularly preferred is a metal complex composed of a metal element selected from Groups 2A, 3B, 4A and 5A of the Periodic Table and an oxo- or hydroxyoxygen-containing compound selected from a β-diketone, a ketoester, a hydroxycarboxylic acid or an ester thereof, an aminoalcohol and an enolic active hydrogen compound.

Among the constituent metal elements, preferred are a Group 2A element such as Mg, Ca, Sr and Ba, a Group 3B element such as A1 and Ga, a Group 4A element such as Ti and Zr, and a Group 5A element such as V, Nb and Ta. These metal elements each forms a complex having an excellent catalyst effect. Above all, complexes formed from Zr, Al and Ti are excellent and preferred.

Examples of the oxo- or hydroxyoxygen-containing compound constituting the ligand of the metal complex for use in the present invention include β-diketones such as acetylacetone, acetylacetone(2,4-pentanedione) and 2,4-heptanedione; ketoesters such as methyl acetoacetate, ethyl acetoacetate and butyl acetoacetate; hydroxycarboxylic acids and esters thereof, such as lactic acid, methyl lactate, salicylic acid, ethyl salicylate, phenyl salicylate, malic acid, tartaric acid and methyl tartrate; ketoalcohols such as 4-hydroxy-4-methyl-2-pentanone, 4-hydroxy-2-pentanone, 4-hydroxy-4-methyl-2-heptanone and 4-hydroxy-2-heptanone; aminoalcohols such as monoethanolamine, N,N-dimethylethanolamine, N-methyl-monoethanolamine, diethanolamine and triethanolamine; enolic active compounds such as methylolmelamine, methylolurea, methylolacrylamide and diethyl malonate; and compounds having a substituent on the methyl group, methylene group or carbonyl carbon of acetylacetone(2,4-pentanediol).

The ligand is preferably an acetylacetone derivative. The acetylacetone derivative as used in the present invention indicates a compound having a substituent on the methyl group, methylene group or carbonyl carbon of acetylacetone. Examples of the substituent substituted on the methyl group of acetylacetone include a linear or branched alkyl group, an acyl group, a hydroxyalkyl group, a carboxyalkyl group, an alkoxy group and an alkoxyalkyl group each having a carbon number of 1 to 3. Examples of the substituent substituted on the methylene group of acetylacetone include a carboxyl group, and linear or branched carboxyalkyl and hydroxyalkyl groups each having a carbon number of 1 to 3. Examples of the substituent substituted on the carbonyl carbon of acetylacetone include an alkyl group having a carbon number of 1 to 3, and in this case, a hydrogen atom is added to the carbonyl oxygen to form a hydroxyl group.

Specific preferred examples of the acetylacetone derivative include ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol. Among these, acetylacetone and diacetylacetone are more preferred. The complex of this acetylacetone derivative with the metal element above is a mononuclear complex in which from 1 to 4 acetylacetone derivative molecules are coordinated per one metal element, and in the case where the number of coordination bonds of the metal element is larger than the total number of coordination bonds of acetylacetone derivatives, the metal element may be coordinated with a ligand commonly used in a normal complex, such as water molecule, halogen ion, nitro group and ammonio group.

Preferred examples of the metal complex include a tris(acetylacetonato)aluminum complex salt, a di(acetylacetonato)aluminum•aquo-complex salt, a mono(acetylacetonato)aluminum•chloro-complex salt, a di(diacetylacetonato)aluminum complex salt, an ethylacetoacetate aluminum diisopropylate, an aluminum tris(ethylacetoacetate), a cyclic aluminum oxide isopropylate, a tris(acetylacetonato)barium complex salt, a di(acetylacetonato)titanium complex salt, a tris(acetylacetonato)titanium complex salt, a di-i-propoxy•bis(acetylacetonato)titanium complex salt, a zirconium tris(ethylacetoacetate) and a zirconium tris(benzoate) complex salt. These compounds exhibit excellent stability in an aqueous coating solution and provide an excellent effect of accelerating the gelling in a sol-gel reaction at the drying by heating. Above all, an ethylacetoacetate aluminum diisopropylate, an aluminum tris(ethylacetoacetate), a di(acetylacetonato)titanium complex salt and a zirconium tris(ethylacetoacetate) are more preferred.

In present invention, the counter salt of the metal complex above is omitted, but the metal complex may have an arbitrary kind of a counter salt as long as it is a water-soluble salt capable of keeping the charge neutrality as a complex compound. For example, a salt form ensuring stoichiometric neutrality, such as nitrate, halogen acid salt, sulfate and phosphate, is used. The behavior of the metal complex in a silica sol-gel reaction is described in detail in J. Sol-Gel Sci. and Tec., 16, 209 (1999). As for the reaction mechanism, the following scheme is presumed, that is, the metal complex in a coating solution is stable by taking on a coordination structure and in a dehydrating condensation reaction started in the process of heating and drying after coating, promotes crosslinking by the mechanism like an acid catalyst.
In any way, by virtue of using this metal complex, stability with aging of the coating solution, improvement of the film surface quality, high hydrophilicity and high durability all are satisfied.

Also, other than the metal complex catalyst above, a catalyst capable of promoting the hydrolysis and polycondensation of a metal alkoxide compound selected from Si, Ti, Zr and Al and causing bonding with a hydrophilic polymer may be used in combination. Examples of such a catalyst include a compound exhibiting acidity, such as hydrogen halide (e.g., hydrochloric acid), carboxylic acid (e.g., nitric acid, sulfuric acid, sulfurous acid, hydrogen sulfide, perchloric acid, hydrogen peroxide, carbonic acid, formic acid, acetic acid), substituted carboxylic acid where R in the structural formula RCOOH is substituted by another element or substituent, and sulfonic acid (e.g., benzenesulfonic acid); and a basic compound such as ammoniacal base (e.g., aqueous ammonia) and amines (e.g., ethylamine, aniline).
The above-described metal complex catalyst is easily available as a commercial product or may be obtained by a known synthesis method, for example, a reaction of each metal chloride with an alcohol.

The metal complex catalyst (B) for use in the present invention is used in an amount of, in terms of nonvolatile components, preferably from 0 to 50 mass%, more preferably from 5 to 25 mass%, based on the composition of the present invention. As for the metal complex catalyst (B), one kind may be used alone, or two or more kinds may be used in combination.

The aerosol composition for forming a hydrophilic film of the present invention contains the composition for forming a hydrophilic film, containing the components (A) and (B), and a propellant.
The composition for forming a hydrophilic film preferably further contains (C) at least one of an alkoxide compound containing an element selected from Si, Ti, Zr and Al and a partial hydrolysis condensate thereof.
The (C) alkoxide compound containing an element selected from Si, Ti, Zr and Al and a partial hydrolysis condensate thereof, which are preferably used in the present invention, are described below.

The alkoxide compound of an element selected from Si, Ti, Zr and Al, which is the (C) alkoxide compound containing an element selected from Si, Ti, Zr and Al (hereinafter sometimes referred to as a "specific alkoxide") for use in the present invention, is a hydrolysis-polymerizable compound having a polymerizable functional group in its structure and fulfilling a function as a crosslinking agent. This compound forms a firm coating having a crosslinked structure by undergoing polycondensation with the hydrophilic polymer (A).

The specific alkoxide (C) is preferably a compound represented by the following formula (II). In forming a crosslinked structure to cure a hydrophilic film, the hydrophilic polymer (A) and the specific alkoxide (C) represented by formula (II) are mixed and applied on a substrate surface by spray coating and dried.

Formula (II): (R⁹)ₖ-Y-(OR¹⁰)₄₋ₖ

In formula (II), R⁹ represents a hydrogen atom, an alkyl group or an aryl group, R¹⁰ represents an alkyl group or an aryl group, Y represents Si, Al, Ti or Zr, and k represents an integer of 0 to 2. When R⁹ and R¹⁰ each represents an alkyl group, the carbon number of the alkyl group is preferably from 1 to 4.
The alkyl group and aryl group may have a substituent, and examples of the substituent which can be introduced include a halogen atom, an amino group and a mercapto group. Incidentally, this compound is a low molecular compound and preferably has a molecular weight of 1,000 or less.

Specific examples of the specific alkoxide (C) represented by formula (II) are described below, but the present invention is not limited thereto. In the case where Y is Si, that is, when the specific alkoxide contains silicon, examples of the compound include trimethoxysilane, tetramethoxysilane, tripropoxysilane, tetramethoxysilane, tetraethoxysilane, tetrapropoxysilane, methyltrimethoxysilane, ethyltriethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane and diphenyldiethoxysilane. Among these, preferred are trimethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane and diphenyldiethoxysilane.

In the case where Y is Al, that is, when the specific alkoxide contains aluminum, examples of the compound include trimethoxyaluminate, triethoxyaluminate, tripropoxyaluminate and tetraethoxyaluminate.

In the case where Y is Ti, that is, when the specific alkoxide contains titanium, examples of the compound include trimethoxytitanate, tetramethoxytitanate, triethoxytitanate, tetraethoxytitanate, tetrapropoxytitanate, chlorotrimethoxytitanate, chlorotriethoxytitanate, ethyltrimethoxytitanate, methyltriethoxytitanate, ethyltriethoxytitanate, diethyldiethoxytitanate, phenyltrimethoxytitanate and phenyltriethoxytitanate.

In the case where Y is Zr, that is, when the specific alkoxide contains zirconium, examples of the compound include zirconates corresponding to the compounds described above as examples of the compound containing titanium.

Among these, an alkoxide where Y is Si is preferred in view of coatability. As for the specific alkoxide, a commercial product is easily available or the compound can be obtained by a known synthesis method, for example, a reaction of each metal chloride with an alcohol.

The partial hydrolysis condensate of an alkoxide compound containing an element selected from Si, Ti, Zr and Al is a compound obtained by oligomerizing the above-described specific alkoxide through hydrolysis and condensation.
In view of the film strength, an oligomer form of the specific alkoxide is preferably used.
The oligomer of the specific alkoxide for use in the present invention is a sol obtained by allowing the condensation of the specific alkoxide to linearly proceed and is a polymer soluble in a solvent and water (on the other hand, when the condensation further proceeds and the polymer becomes insoluble in a solvent and water due to linear crosslinking of sols with each other, this is called a gel). The oligomer of the present invention is characterized by having a viscosity in a specific range.
The oligomer form is unstable and readily gelled and is uncontrollable. However, the present inventors have found that the oligomer can be stably handled by setting the viscosity to a specific region. When an oligomer in a specific viscosity range is used, since condensation previously proceeded, the apparent reactivity is increased and after the formation of a coating by spraying, a film with high strength can be obtained even under drying conditions of low temperature.
The hydrolysis and condensation reaction is performed in an appropriate polar solvent such as alcohol, ketone and ether by using an acid such as hydrochloric acid, sulfuric acid or nitric acid or using a cation exchange resin as a solid acid at a temperature of usually from 0 to 60°C, preferably from 20 to 40°C, and an oligomer having a viscosity at 20°C of 2 mPa·s or more, preferably from 2 to 15 mPa·s, is obtained. If the viscosity is less than 2 mPa·s, the surface becomes sloppy when dried under the conditions of room temperature after the formation of a hydrophilic film and a film with high strength can be hardly obtained, whereas if the viscosity exceeds 15 mPa·s, liquid stability is decreased and poor handleability results. The viscosity range is preferably from 2 to 15 mPa·s, more preferably from 3 to 12 mPa·s.
In the specific alkoxide oligomer form obtained by the hydrolysis and condensation reaction, the repetition number of specific alkoxides (number of units) is preferably from 3 to 20, more preferably from 4 to 15.
As for the oligomer form of the specific alkoxide, a commercially available product may be used, or an oligomer form obtained by a hydrolysis and condensation reaction of a known specific alkoxide may be used.
With respect to (C) the specific alkoxide and the oligomer form of the specific alkoxide for use in the present invention, one kind may be used alone, or two or more kinds may be used in combination.
The (C) at least one of a specific alkoxide and an oligomer form of the specific alkoxide is used in an amount of, in terms of nonvolatile components, preferably from 5 to 80 mass%, more preferably from 10 to 70 mass%, based on the composition of the present invention.

The composition for forming a hydrophilic film may contain at least one of an organic solvent and water, and the organic solvent and/or water is not particularly limited as long as the aqueous resin composition can be uniformly dissolved or dispersed therein, but an aqueous solvent such as methanol, ethanol, isopropanol and water is preferred.
The composition for forming a hydrophilic film of the present invention can easily form a coating and can be used as a spray composition with excellent coating workability.

### [Spray Composition]

The spray composition of the present invention contains the above-described components (A) and (B) and is preferably a composition for forming a hydrophilic film and may contain a propellant. The spray composition of the present invention is a spray excellent in the workability, and the coating film formed by coating it expresses high hydrophilicity.

### [Spray Container]

The composition of the present invention is characterized by being housed in a spray container. Examples of the spray container include an aerosol spray container, a trigger spray container (direct pressure type or stored pressure type), and a dispenser spray container. Examples of the aerosol spray container include those described in JP-A-9-3441 and JP-A-9-58765.
Examples of the trigger spray container include those described in JP-A-9-268473, JP-A-9-256272 and JP-A-10-76196. Examples of the dispenser spray container include those described in JP-A-9-256272. Out of these spray containers, an aerosol spray, a trigger spray and a dispenser are preferred in view of profitability, because the container can be repeatedly used by refilling it.

### [Propellant]

The composition of the present invention may further contain a propellant in the above-described hydrophilic film-forming components, and the hydrophilic film-forming components can be filled together with a propellant preferably in an aerosol container to prepare a hydrophilic aerosol coating solution. Examples of the propellant include LPG (liquefied petroleum gas), DME (dimethyl ether), carbon dioxide gas and nitrogen gas. One of these propellants may be used alone, or two or more thereof may be mixed and used. The amount of the propellant used is, in terms of a volume ratio to the composition for the formation of a hydrophilic film, preferably from 5/95 to 95/5 (propellant/composition for forming a hydrophilic film).

The hydrophilic member of the present invention is obtained by providing the composition above on a substrate by spray coating. After the coating, the coating is naturally dried or dried under heating to form a hydrophilic film (hydrophilic layer) on the substrate surface, whereby the hydrophilic member can be obtained. In the case of drying the coating under heating, the heating temperature and heating time are not particularly limited as long as they are the temperature and time capable of removing the solvent in the sprayed coating solution and forming a firm coat, but in view of production suitability and the like, the heating temperature is preferably 150°C or less and the heating time is preferably within 1 hour. In the hydrophilic member of the present invention, after the spray coating, the composition above can be further coated thereon by a known coating method such as bar coater method, brush coating method or sponge coating method.

### [Antimicrobial Agent]

An antimicrobial agent can be incorporated into the composition so as to impart antimicrobial, antifungal and anti-algae properties to the hydrophilic member of the present invention. In forming a hydrophilic layer, a hydrophilic and water-soluble antimicrobial agent is preferably incorporated. By virtue of incorporating a hydrophilic and water-soluble antimicrobial agent, a surface hydrophilic member excellent in the antibacterial, antifungal and anti-algae properties can be obtained without impairing the surface hydrophilicity.
As for the antimicrobial agent, a compound incapable of reducing the hydrophilicity of the hydrophilic member is preferably added, and examples of such an antimicrobial agent include an inorganic antimicrobial agent and a water-soluble organic antimicrobial agent. An antimicrobial agent having an antiseptic effect on microorganisms in the environment, such as bacteria typified by Staphylococcus aureus and Bacillus coli and fungi typified by mold and yeast, is used.

The organic antimicrobial agents include, for example, a phenol ether derivative, an imidazole derivative, a sulfone derivative, an N-haloalkylthio compound, an anilide derivative, a pyrrole derivative, a quaternary ammonium salt, a pyridine-based antimicrobial, a triazine-based antimicrobial, a benzisothiazoline-based antimicrobial and an isothiazoline-based antimicrobial.
Examples thereof include, but are not limited to, 1,2-benzisothiazolin-3-one, N-fluorodichloromethylthiophthalimide, 2,3,5,6-tetrachloroisophthalonitrile, N-trichloromethylthio-4-cyclohexene-1,2-dicarboxyimide, copper 8-quinolinate, bis(tributyltin)oxide, 2-(4-thiazolyl)benzimidazole (hereinafter, referred to as "TBZ"), methyl 2-benzimidazolecarbamate (hereinafter, referred to as "BCM"), 10,10'-oxybisphenoxyarsine (hereinafter, referred to as "OBPA"), 2,3,5,6-tetrachloro-4-(methylsulfone)pyridine, bis(2-pyridylthio-1-oxide)zinc (hereinafter, referred to as "ZPT"), N,N-dimethyl-N'-(fluorodichloromethylthio)-N'-phenylsulfamido(dichlorofluanide), poly-(hexamethylenebiguanide) hydrochloride, dithio-2,2'-bis(benzmethylamide), 2-methyl-4,5-trimethylene-4-isothiazolin-3-one, 2-bromo-2-nitro-1,3-propanediol, hexahydro-1,3-tris-(2-hydroxyethyl)-S-triazine, p-chloro-m-xylenol and 1,2-benzisothiazolin-3-one.
Such an organic antimicrobial agent can be appropriately selected and used by taking into consideration the hydrophilicity, water resistance, sublimability, stability and the like. Of the organic antimicrobial agents preferred are 2-bromo-2-nitro-1,3-propanediol, TBZ, BCM, OBPA and ZPT in view of hydrophilicity, antimicrobial effect and cost.

The inorganic antimicrobial agent includes, in descending order of antiseptic activity, mercury, silver, copper, zinc, iron, lead, bismuth and the like. For example, a metal or metal ion such as silver, copper, zinc or nickel is loaded on a support such as silicate-based support, phosphate-based support, oxide, glass, potassium titanate and amino acid. Examples of the inorganic antimicrobial agent include, but are not limited to, a zeolite-based antimicrobial, a calcium silicate-based antimicrobial, a zirconium phosphate-based antimicrobial, a calcium phosphate-based antimicrobial, a zinc oxide-based antimicrobial, a soluble glass-containing antimicrobial, a silica gel-based antimicrobial, an activated carbon-based antimicrobial, a titanium oxide-based antimicrobial, a titania-based antimicrobial, an organometallic antimicrobial, an ion exchanger ceramic antimicrobial, a layered phosphate-quaternary ammonium salt-based antimicrobial, and an antimicrobial stainless steel.

The naturally occurring antimicrobial agent includes chitosan that is a basic polysaccharide obtained by hydrolyzing chitin contained in crustaceans such as crab and shrimp.
In the present invention, "HOLON KILLER BEADS CELLER (trade name)" of Nikko Co., which is composed of an amino metal having a metal compounded on both sides of an amino acid, is preferred.
This antimicrobial agent is nonvolatile, readily interacts with the polymer or crosslinking agent component of the hydrophilic layer, realizes stable molecular dispersion or solid dispersion, allows effective exposure of the antimicrobial to the hydrophilic layer surface, does not dissolve out even when wetted with water, can sustain its effect over a long period of time, does not affect the human body, can be stably dispersed in the hydrophilic layer or coating solution, and causes no deterioration of the hydrophilic layer or coating solution.
Of the antimicrobial agents described above, a silver-based inorganic antimicrobial agent and a water-soluble organic antimicrobial agent are most preferred because of their high antimicrobial effect. Above all, a silver zeolite obtained by loading silver on zeolite that is a silicate support, an antimicrobial agent obtained by loading silver on silica gel, 2-bromo-2-nitro-1,3-propanediol, TPN, TBZ, BCM, OBPA, and ZPT are preferred. Particularly preferred examples of the commercially available silver zeolite-based antimicrobial agent include "Zeomic" of Shinagawa Fuel Co., Ltd., "Silwell" of Fuji Silysia Chemical Ltd., and "Bactenon" from Japan Electronic Materials Corp. In addition, "Novaron" of Toa Gosei Co., Ltd., where silver is supported on an inorganic ion exchanger ceramic; "Atomy Ball" of Catalysts & Chemicals Industries Co., Ltd.; and "San-ai Bac P" that is a triazine-based antimicrobial, are also preferred.

The content of the antimicrobial agent is usually from 0.001 to 10 mass%, preferably from 0.005 to 5 mass%, more preferably from 0.01 to 3 mass%, still more preferably 0.02 to 1.5 mass%, and most preferably 0.05 to 1 mass%. When the content is 0.001 mass% or more, an effective antimicrobial action can be obtained, and when the content is 10 mass% or less, there are caused no deterioration of the hydrophilicity and aging property and no adverse effect on the antifouling and antifogging properties.

### [Inorganic Fine Particle]

The composition of the present invention may contain an inorganic fine particle for enhancing the hydrophilicity, preventing cracking of the coat or increasing the film strength. Suitable examples of the inorganic fine particle include silica, alumina, magnesium oxide, titanium oxide, magnesium carbonate, calcium alginate, and a mixture thereof.
The inorganic fine particle preferably has an average particle diameter of 5 nm to 10 µm, more preferably from 0.5 to 3 µm. Within this range, the particle is stably dispersed in the hydrophilic film and maintains sufficient film strength of the hydrophilic layer, so that a hydrophilic member having high durability and excellent hydrophilicity can be formed.
The composition of the present invention preferably contains (D) colloidal silica, and out of the inorganic fine particles described above, a colloidal silica dispersion is particularly preferred, and this can be easily available as a commercial product.
The content of the inorganic fine particle is preferably 80 mass% or less, more preferably 50 mass% or less, based on the entire solid content of the hydrophilic layer.

### [Other Components]

Various additives which can be used in the composition of the present invention, if desired, are described below.

### 1) Surfactant

In the present invention, a surfactant may be added from the standpoint of enhancing the coat property and hydrophilicity of the hydrophilic member. The mechanism of enhancing the hydrophilicity is not clearly known but is considered as follows: the surfactant is oriented on the surface of the hydrophilic member and a hydrophilic group of the specific hydrophilic polymer is unevenly distributed to the vicinity of the surface, whereby high hydrophilicity is exhibited.
The surfactant includes those described in JP-A-62-173463 and JP-A-62-183457. Examples thereof include an anionic surfactant such as dialkylsulfosuccinates, alkylnaphthalenesulfonates and fatty acid salts; a nonionic surfactant such as polyoxyethylene alkyl ethers, polyoxyethylene alkylallyl ethers, acetylene glycols and polyoxyethylene·polyoxypropylene block copolymers; and a cationic surfactant such as alkylamine salts and quaternary ammonium salts. Here, an organic fluoro compound may be used in place of the surfactant. The organic fluoro compound is preferably hydrophobic. The organic fluoro compound includes, for example, a fluorine-containing surfactant, an oily fluorine-based compound (e.g., fluorine oil) and a solid fluorine compound resin (e.g., ethylene tetrafluoride resin), and examples thereof include those described in JP-B-57-9053 (the term "JP-B" as used herein means an "examined Japanese patent publication") (columns 8 to 17) and JP-A-62-135826. In view of enhancing the hydrophilicity, use of an anionic surfactant is more preferred.

### 2) Ultraviolet Absorber

In the present invention, from the standpoint of enhancing the weather resistance and durability of the hydrophilic member, an ultraviolet absorber can be used.
Examples of the ultraviolet absorber include benzotriazole-based compounds described in JP-A-58-185677, JP-A-61-190537, JP-A-2-782, JP-A-5-197075 and JP-A-9-34057, benzophenone-based compounds described in JP-A-46-2784, JP-A-5-194483 and U.S. Patent 3,214,463, cinnamic acid-based compounds described in JP-B-48-30492, JP-B-56-21141 and JP-A-10-88106, triazine-based compounds described in JP-A-4-298503, JP-A-8-53427, JP-A-8-239368, JP-A-10-182621 and JP-T-8-501291 (the term "JP-T" as used herein means a "published Japanese translation of a PCT patent application"), compounds described in Research Disclosure, No. 24239, and compounds capable of absorbing ultraviolet light and emitting fluorescent light, so-called fluorescent brightening agents, as typified by stilbene-based and benzoxazole-based compounds.
The amount of the ultraviolet absorber added is appropriately selected according to the purpose but in general, the amount added is preferably from 0.5 to 15 mass% in terms of the solid content.

### 3) Antioxidant

An antioxidant may be added to the coating solution for forming a hydrophilic layer so as to enhance the stability of the hydrophilic member of the present invention. Examples of the antioxidant include those described in European Unexamined Patent Publication Nos. 223739, 309401, 309402, 310551, 310552 and 459416, German Unexamined Patent Publication No. 3435443, JP-A-54-262047, JP-A-63-113536, JP-A-63-163351, JP-A-2-262654, JP-A-2-71262, JP-A-3-121449, JP-A-5-61166, JP-A-5-119449, and U.S. Patents 4,814,262 and 4,980,275.
The amount of the antioxidant added is appropriately selected according to the purpose but is preferably from 0.1 to 8 mass% in terms of the solid content.

### 4) Solvent

For ensuring formation of a uniform coating film on a substrate when forming a hydrophilic layer of the hydrophilic member of the present invention, it is also effective to appropriately add an organic solvent to the coating solution for forming a hydrophilic layer.
Examples of the solvent include a ketone-based solvent such as acetone, methyl ethyl ketone and diethyl ketone, an alcohol-based solvent such as methanol, ethanol, 2-propanol, 1-propanol, 1-butanol and tert-butanol, a chlorine-based solvent such as chloroform and methylene chloride, an aromatic solvent such as benzene and toluene, an ester-based solvent such as ethyl acetate, butyl acetate and isopropyl acetate, an ether-based solvent such as diethyl ether, tetrahydrofuran and dioxane, and a glycol ether-based solvent such as ethylene glycol monomethyl ether and ethylene glycol dimethyl ether.
In this case, addition of a solvent in a range not causing a problem in relation to VOC (volatile organic compounds) is effective, and the amount of the solvent is preferably from 0 to 50 mass%, more preferably from 0 to 30 mass%, based on the entire coating solution when forming a hydrophilic member.

### 5) Polymer Compound

In the coating solution for forming a hydrophilic layer of the hydrophilic member of the present invention, for adjusting the film properties of the hydrophilic layer, various polymer compounds may be added within the range not inhibiting the hydrophilicity. Examples of the polymer compound which can be used include an acrylic polymer, a polyvinyl alcohol resin, a polyvinylbutyral resin, a polyurethane resin, a polyamide resin, a polyester resin, an epoxy resin, a phenol resin, a polycarbonate resin, a polyvinylformal resin, shellac, a vinyl-based resin, an acrylic resin, a rubber-based resin, waxes, and other natural resins. Two or more of these compounds may be used in combination. Above all, a vinyl-based copolymer obtained by the copolymerization of an acrylic monomer is preferred. Furthermore, as for the copolymerization composition of a polymer binder, there may also be preferably used a copolymer where a "carboxyl group-containing monomer", an "alkyl methacrylate" or an "alkyl acrylate" is contained as a structural unit.

If desired, for example, a leveling additive, a matting agent, waxes for adjusting the film properties, and for improving the adherence to a substrate, a tackifier in the range not inhibiting the hydrophilicity, may be contained.
Specific examples of the tackifier include adhesive polymers having a high molecular weight described in JP-A-2001-49200, pages 5 and 6 (for example, a copolymerization product comprising an ester of a (meth)acrylic acid and an alcohol containing an alkyl group having a carbon number of 1 to 20, an ester of a (meth)acrylic acid and an alicyclic alcohol having a carbon number of 3 to 14, and an ester of a (meth)acrylic acid and an aromatic alcohol having a carbon number of 6 to 14), and a low molecular weight tackifier resin having a polymerizable unsaturated bond.

### [Substrate]

The substrate for use in the present invention is not particularly limited, and glass, plastic, metal, ceramic, stainless steel, aluminum, wood, stone, cement, concrete, fiber, cloth, paper, leather, and a combination or laminate thereof all may be suitably utilized. In particular, the substrate is preferably a glass substrate, a plastic substrate a stainless steel substrate or an aluminum substrate.
As for the glass substrate, any glass such as soda glass, lead glass and borosilicate glass may be used. Also, according to the purpose, float sheet glass, figured glass, frosted sheet glass, mesh glass, wired glass, tempered glass, laminated glass, double glass, vacuum glass, security glass, or highly insulating low-E double glass may be used. Furthermore, the hydrophilic layer may be provided directly on the green sheet glass, but, if desired, one surface or both surfaces of the glass substrate may be subjected to a surface hydrophilizing treatment by oxidation, surface roughening or the like so as to enhance the adherence of the hydrophilic layer. Examples of the oxidation method include a corona discharge treatment, a glow discharge treatment, a chromic acid treatment (wet), a flame treatment, a hot air treatment, and an ozone/ultraviolet irradiation treatment. As for the surface roughening method, the surface may also be mechanically roughened by sandblasting, brush polishing or the like.

The plastic substrate for use in the present invention is not particularly limited, but there may be used a film or sheet formed of polyester, polyethylene, polypropylene, cellophane, triacetyl cellulose, diacetyl cellulose, acetyl cellulose butyrate, polyvinyl chloride, polyvinylidene chloride, polyvinyl alcohol, polyethylene vinyl alcohol, polystyrene, polycarbonate, polymethylpentene, polysulfone, polyether ketone, acryl, nylon, fluororesin, polyimide, polyetherimide, polyethersulfone or the like. Above all, a polyester film such as polyethylene terephthalate and polyethylene naphthalate is preferred. Incidentally, a plastic substrate with excellent transparency is preferred from an optical viewpoint, but a translucent or printed substrate is used depending on the usage. The thickness of the plastic substrate varies according to the other party stacked thereon. For example, in use for a portion having many curves, a thin substrate is preferred and a plastic substrate having a thickness of approximately from 6 to 50 µm is used. Also, in use for a flat plane or a portion requiring strength, a plastic substrate of 50 to 400 µm is used.

For the purpose of enhancing the adherence between the substrate and the hydrophilic layer, one surface or both surfaces of the substrate may be subjected, if desired, to a surface hydrophilizing treatment by oxidation, surface roughening or the like. Examples of the oxidation method include a corona discharge treatment, a glow discharge treatment, a chromic acid treatment (wet), a flame treatment, a hot air treatment, and an ozone/ultraviolet irradiation treatment. As for the surface roughening method, the surface may also be mechanically roughened by sandblasting, brush polishing or the like.

In the present invention, one undercoat layer or two or more undercoat layers can be provided between the substrate and the hydrophilic layer.
The undercoat layer is preferably a layer formed by hydrolyzing and polycondensing a composition composed of at least an alkoxide compound containing an element selected from Si, Ti, Zr and Al and a nonvolatile catalyst.
The undercoat layer formed by hydrolyzing and polycondensing a composition composed of at least an alkoxide compound containing an element selected from Si, Ti, Zr and Al and a nonvolatile catalyst has a crosslinked structure and in the present invention, such a crosslinked structure formed by hydrolysis and polycondensation of an alkoxide compound is sometimes referred to as a sol-gel crosslinked structure.

Examples of the alkoxide compound containing an element selected from Si, Ti, Zr and Al include those described above, and among these, an alkoxide containing Si is preferred in view of reactivity and easy availability. Specifically, a compound used for a silane coupling agent may be suitably used.

The nonvolatile catalyst for use in the undercoat layer is a catalyst except for those having a boiling point of less than 20°C. In other words, the nonvolatile catalyst includes, for example, those having a boiling point of 20°C or more and those originally having no boiling point (including those incapable of undergoing a phase change such as thermal decomposition).
The nonvolatile catalyst for use in the present invention is not particularly limited, but examples thereof include a metal complex (sometimes referred to as a metal chelate compound) and a silane coupling agent. In this art, an acid or an alkali is suitably used, and such an acid or alkali may be applied without any particular limitation as long as it has a boiling point of 20°C or more. Excluding hydrochloric acid having a boiling point of - 83°C, for example, a nitric acid having a boiling point of 121°C and a phosphoric acid having a decomposition temperature of 213°C are applicable as the nonvolatile catalyst in the present invention.
Examples of the metal complex include those described above.

The silane coupling agent used as the nonvolatile catalyst is not particularly limited but include, those having a functional group exhibiting acidity or alkalinity, more specifically, includes a silane coupling agent having a functional group exhibiting acidity, such as peroxo acid, carboxylic acid, carbohydrazonic acid, carboximidic acid, sulfonic acid, sulfinic acid, sulfenic acid, selenonic acid, seleninic acid, selenenic acid, telluronic acid and the above-described alkali metal salt, and a silane coupling agent having a functional group exhibiting basicity, such as amino group.

The undercoat layer can be formed by coating a composition containing at least the above-described alkoxide compound and nonvolatile catalyst on a substrate, and heating and drying the coating to effect hydrolysis and polycondensation of the composition. The heating temperature and heating time for the formation of the undercoat layer are not particularly limited as long as they are the temperature and time capable of removing the solvent in the sol solution and forming a firm coat, but in view of production suitability and the like, the heating temperature is preferably 150°C or less and the heating time is preferably within 1 hour.
The undercoat layer can be produced by a known coating method, and the coating method is not particularly limited but, for example, a spray coating method, a dip coating method, a flow coating method, a spin coating method, a roll coating method, a film applicator method, a screen printing method, a bar coater method, a brush coating method or a sponge coating method may be applied.

As concerns the thus-obtained undercoat layer, the nonvolatile catalyst is contained therein and allowed to be present without losing its activity and in particular, exists also on the surface, whereby very high adherence is obtained at the interface between the undercoat layer and the hydrophilic layer.

Also, as concerns the undercoat layer, the adherence at the interface between the undercoat layer and the hydrophilic layer can be made higher by applying plasma etching or mixing a metal particle and thereby providing fine irregularities.

The material used for the undercoat layer may be a hydrophilic resin or a water-dispersible latex.
Examples of the hydrophilic resin include polyvinyl alcohol (PVA), a cellulosic resin [e.g., methyl cellulose (MC), hydroxyethyl cellulose (HEC), carboxymethyl cellulose (CMC)], chitins, chitosans, starch, an ether bond-containing resin [e.g., polyethylene oxide (PEO), polyethylene glycol (PEG), polyvinyl ether (PVE)], and a carbamoyl group-containing resin [e.g., polyacrylamide (PAAM), polyvinylpyrrolidone (PVP)]. Other examples include a carboxyl group-containing polyacrylate, a maleic acid resin, an alginate and gelatins.
Among these, at least one member selected from a polyvinyl alcohol-based resin, a cellulosic resin, an ether bond-containing resin, a carbamoyl group-containing resin, a carboxyl group-containing resin and gelatins is preferred, and a polyvinyl alcohol (PVA)-based resin and gelatins are more preferred.

Examples of the water-dispersible latex include an acrylic latex, a polyester-based latex, an NBR resin, a polyurethane-based latex, a polyvinyl acetate-based latex, an SBR resin and a polyamide-based latex, with an acrylic latex being preferred.
As regards each of the above-described hydrophilic resin and water-dispersible latex, one kind may be used alone or two or more kinds may be used in combination. A hydrophilic resin and a water-dispersible latex may also be used in combination.
Furthermore, a crosslinking agent for crosslinking the above-described hydrophilic resin or water-dispersible latex may be used.
As for the crosslinking agent applicable to the present invention, a known crosslinking agent capable of forming crosslinking by the effect of heat may be used. Examples of the general thermal crosslinking agent include those described in Tosuke Kaneko, Kakyozai Handbook (Handbook of Crosslinking Agents), Taisei-sha (1981). The crosslinking agent for use in the present invention is not particularly limited as long as it has two or more functional groups and can be effectively crosslinked with the hydrophilic resin or water-dispersible latex. Specific examples of the thermal crosslinking agent include a polycarboxylic acid such as polyacrylic acid; an amine compound such as polyethyleneimine; a polyepoxy compound such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether and sorbitol polyglycidyl ether; a polyaldehyde compound such as glyoxal and terephthalaldehyde; a polyisocyanate compound such as tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalene-1,5-diisocyanate, isopropylbenzene-2,4-diisocyanate and addition reaction product of polypropylene glycol/tolylene diisocyanate; a block polyisocyanate compound; a silane coupling agent such as tetraalkoxysilane; a metal crosslinking agent such as acetylacetonate of aluminum, copper or iron(III); and a polymethylol compound such as trimethylolmelamine and pentaerythritol. Of these thermal crosslinking agents, a water-soluble crosslinking agent is preferred from the standpoint of easily preparing a coating solution and preventing reduction in the hydrophilicity of the prepared hydrophilic layer.
The total amount of at least one of the above-described hydrophilic resin and water-dispersible latex in the undercoat layer is preferably from 0.01 to 20 g/m², more preferably of from 0.1 to 10 g/m².

### [Layer Construction in Use of Hydrophilic Member]

The hydrophilic member of the present invention can be used after appropriately adding a separate layer according to the purpose, mode and place in use. The construction of layers added, if desired, is described below.

### 1) Adhesive Layer

In the case of using the hydrophilic member of the present invention by laminating it to another substrate, an adhesive that is a pressure-sensitive adhesive is preferably used as an adhesive layer on the back surface of the substrate. As for the adhesive, those generally used for a self-adhesive sheet, such as rubber-based adhesive, acryl-based adhesive, silicone-based adhesive, vinyl ether-based adhesive and styrene-based adhesive, may be used.
In the case where optical transparency is required, an adhesive for optical usage is selected. In the case where a pattern such as coloration, translucence or mat texture is required, in addition to the texturing of the substrate, a dye or an organic or inorganic fine particle may be added to the adhesive so as to bring out the effect.
In the case where a tackifier is required, one kind of a resin, for example, a tackifier resin such as rosin-based resin, terpene-based resin, petroleum-based resin, styrene-based resin and hydrogenation product thereof, may be used, or some of them may be mixed and used.
The adhesive force of the adhesive for use in the present invention is an adhesive force generally called strong adhesion and is 200 g/25 mm or more, preferably 300 g/25 mm or more, more preferably 400 g/25 mm or more. The adhesive force as used herein is a value measured by a 180° peeling test according to JIS Z 0237.

### 2) Release Layer

In the case where the hydrophilic member of the present invention has the above-described adhesive layer, a release layer may be further added. In the release layer, a release agent is preferably incorporated so as to impart releasability. Examples of the release agent which can be generally used include a silicone-based release agent composed of polyorganosiloxane, a fluorine-based compound, a long chain alkyl-modified polyvinyl alcohol, and a long chain alkyl-modified polyethyleneimine. Also, there may be used various release agents such as hot-melt release agent and monomer-type release agent in which a releasing monomer is cured by radical polymerization, cationic polymerization, polycondensation reaction or the like; a copolymer-based resin such as acryl-silicone-based copolymer resin, acryl-fluorine-based copolymer resin and urethane-silicone-fluorine-based copolymer resin; a resin blend of silicone-based resin and acryl-based resin; and a resin blend of fluorine-based resin and acryl-based resin. In addition, a hardcoat release layer may be formed by curing a curable composition containing at least one atom of fluorine atom and silicon atom and an active energy ray-polymerizable group-containing compound.

### 3) Other Layers

A protective layer may be provided on the hydrophilic layer. The protective layer has a function of preventing scratching on the hydrophilic surface during handling, transportation or storage or preventing reduction in the hydrophilicity due to attachment of a contaminant. As for the protective layer, a hydrophilic polymer layer used for the above-descried release layer or undercoat layer may be used. The protective layer is stripped off after laminating the hydrophilic member to an appropriate substrate.

### [Form of Structure]

The structure having a hydrophilic layer of the present invention may be supplied in the form of a sheet, a roll or a ribbon or may be previously cut for the lamination to an appropriate substrate and then supplied.

### [Surface Free Energy]

The hydrophilicity of the hydrophilic layer surface is generally measured as the contact angle for a water drop. However, the water drop contact angle on the surface having extremely high hydrophilicity as in the present invention sometimes becomes 10° or less, even 5° or less, and cross comparison of the hydrophilicity degree has a limitation. On the other hand, measurement of a surface free energy is known as a method for more particularly evaluating the hydrophilicity degree of a solid surface. Various methods have been proposed thereon, but in the present invention, the surface free energy is measured, for example, by a Zisman plotting method. More specifically, this is a measuring method utilizing the property that the surface tension of an aqueous solution of an inorganic electrolyte such as magnesium chloride becomes larger with an increase in the concentration, where the contact angle is measured using the aqueous solution in air under the room temperature condition, points of the aqueous solution in various concentrations are plotted by taking the surface tension of the aqueous solution on the abscissa and the contact angle in terms of cos θ on the ordinate to obtain a linear relationship, and the surface tension giving cos θ=1, that is, contact angle=0°, is defined as the surface free energy of a solid. The surface tension of water is 72 mN/m, and as the value of surface free energy is larger, the hydrophilicity can be said to be higher.
A hydrophilic layer where the surface free energy measured as above is from 70 to 95 mN/m, preferably from 72 to 93 mN/m, more preferably from 75 to 90 mN/m, is excellent in the hydrophilicity and exhibits good performance.

In the case of applying (using or laminating) the hydrophilic member of the present invention to windowpane or the like, transparency is important from the standpoint of securing visibility. The hydrophilic member of the present invention has excellent transparency, and the transparency is not impaired even when the film thickness is large, so that both transparency and durability can be satisfied. The thickness of the hydrophilic coating is preferably from 0.01 to 100 µm, more preferably from 0.05 to 50 µm, and most preferably from 0.1 to 20 µm. When the film thickness is 0.01 µm or more, sufficiently high hydrophilicity and durability are advantageously obtained, and when the film thickness is 100 µm or less, a problem in the film-forming property, such as cracking, does not arise and this is preferred.
The transparency is evaluated by measuring the light transmittance in the visible light region (400 to 800 nm) by a spectrophotometer. The light transmittance is preferably from 100 to 70%, more preferably from 95 to 75%, and most preferably from 95 to 80%. Within this range, the hydrophilic member having provided therein the hydrophilic coating can be applied to various uses without hindering the visibility.

The material to which the hydrophilic member can be applied is, for example, in the case of expecting an antifogging effect, a transparent material such as transparent glass substrate, transparent plastic substrate, lens, prism and mirror.
As for the glass, any glass such as soda glass, lead glass and borosilicate glass may be used. Also, according to the purpose, float sheet glass, figured glass, frosted sheet glass, mesh glass, wired glass, tempered glass, laminated glass, double glass, vacuum glass, security glass, or highly insulating low-E double glass may be used.
The usage to which the member having an antifogging effect can be applied includes a mirror such as rearview mirror for vehicles, bathroom mirror, lavatory mirror, dental mirror and road mirror; a lens such as eyeglass lens, optical lens, photographic lens, endoscopic lens, illumination lens, semiconductor lens and lens for copier; a prism; a windowpane for buildings or lookout towers; a glass for other building materials; a windowpane for various vehicles such as automobile, railway vehicle, airplane, marine vessel, submarine, snow wagon, ropeway gondola and amusement park gondola; a windshield glass for various vehicles such as automobile, railway vehicle, airplane, marine vessel, submarine, snow wagon, snowmobile, motorcycle, ropeway gondola and amusement park gondola; a glass for protective goggles, sporting goggles, protective mask shields, sporting mask shields, helmet shields or frozen food display cases; a cover glass for measurement hardware; and a film for the lamination to the surface of these articles. Of these uses, most preferred is a glass for automobiles or building materials.

In the case of expecting the surface hydrophilic member of the present invention to exert an antifouling effect, other than glass and plastic, for example, any of metal, ceramic, wood, stone, cement, concrete, fiber, cloth, paper, and a combination or laminate thereof may be suitably used as the substrate therefor.
The usage to which the member having an antifouling effect can be applied includes a building material, a building exterior material such as outer wall and roof, a building interior material, a window frame, a windowpane, a structural member, an exterior or coating for vehicles such as automobile, railway vehicle, airplane, marine vessel, bicycle and motorcycle, an exterior, dust cover or coat for machinery and articles, an exterior or coat for traffic signs, various display devices, advertising towers, road noise barriers, railroad noise barriers, bridges and guardrails, an interior or coat for tunnels, an insulator, a solar cell cover, a heat collector cover for solar water heaters, a plastic greenhouse, a cover for vehicle lights, housing equipment, a toilet, a bathtub, a washstand, a lighting instrument, a lighting instrument cover, a kitchen utensil, a dish, a dish washer, a dish drier, a sink, a cooking oven, a kitchen hood, a ventilation fan, and a film for the lamination to the surface of these articles.
Other examples include a signboard, a traffic sign, a sound insulating wall, a plastic greenhouse, an insulator, a vehicle cover, a tent material, a reflector plate, a rain shutter door, a screen door, a solar cell cover, a heat collector cover of solar water heaters and the like, a road lamp, a pavement, outdoor lighting, a stone/tile for artificial waterfalls/artificial fountains, a bridge, a glass house, an outer wall material, a sealer between walls or glasses, a guardrail, a veranda, a vending machine, an outdoor unit of air conditioners, an outdoor bench, various display devices, a shutter, a tollgate, a fare box, a gutter, a protective cover, dust cover or coat for vehicle lamps, a coat for machinery and articles, an exterior or coat for advertising towers, a structural member, housing equipment, a toilet, a bathtub, a washstand, a lighting instrument, a kitchen utensil, a dish, a dish drier, a sink, a cooking oven, a kitchen hood, a ventilation fan, a window rail, a window flame, a tunnel inner wall, lighting in tunnels, a window sash, a radiator fin for heat exchangers, an outdoor unit of air conditioners, an indoor unit of air conditioners, a pavement, a bathroom or lavatory mirror, a plastic greenhouse ceiling, a bathroom vanity, an automobile body, and a film or emblem which can be laminated to these articles.
This member is also applicable to a roofing material, antenna, transmission line or the like in snow countries, and in this case, an excellent property in view of preventing snow accretion is obtained.

Of these uses, the hydrophilic member of the present invention is preferably applied to a fin material, particularly an aluminum-made fin material. That is, the composition of the present invention is preferably coated on a fin material (preferably an aluminum-made fin material) to form a hydrophilic layer on the fin material surface.
In the case of an aluminum-made fin material used in a heat exchanger or the like of, for example, a room air conditioner or a car air conditioner, aggregated water produced during cooling time grows into a water drop and stays between fins to result in formation of a water bridge and thereby, the cooling capacity is reduced. The cooling capacity is similarly reduced also by attachment of dust or the like between fins. In order to solve these problems, the hydrophilic member of the present is applied to a fin material, whereby a fin material excellent in the hydrophilicity, antifouling property and persistence of these properties is obtained.
In the fin material according to the present invention, the water contact angle after repeating 5 cycles each consisting of exposure to palmitic acid for 1 hour, washing with water for 30 minutes and drying for 30 minutes is preferably 40° or less.

The aluminum used for a fin material includes an aluminum plate whose surface is degreased and, if desired, subjected to a chemical conversion treatment. In view of adhesion of the hydrophilized coat, corrosion resistance and like, the surface of the aluminum-made fm is preferably subjected to a chemical conversion treatment.
The chemical conversion treatment includes, for example, a chromate treatment, and typical examples thereof include a treatment such as alkali salt-chromate method (B.V. method, M.B.V. method, E.W. method, Alrock method and Pylumin method), chromic acid method, chromate method and phosphoric acid-chromic acid method, and a non-water washing and coating-type treatment with a composition mainly composed of chromium chromate.

The thin plate of aluminum or the like used for the fin material of a heat exchanger may be any of a pure aluminum plate such as, in terms of JIS, 1100, 1050, 1200 and 1N30, an Al-Cu alloy plate such as 2017 and 2014, an Al-Mn alloy plate such as 3003 and 3004, an Al-Mg alloy plate such as 5052 and 5083, an Al-Mg-Si alloy plate such as 6061, and the like. The shape thereof may be either a sheet or a coil.

The fin material according to the present invention is preferably used for a heat exchanger. The heat exchanger using the fin material according to the present invention is assured of excellent hydrophilic and antifouling properties as well as persistence of these properties and therefore, can prevent a water drop or dust from attaching between fins. Examples of the heat exchanger include a heat exchanger used in room coolers, indoor air conditioners, oil coolers for construction machinery, car radiators and capacitors.
The heat exchanger with the fin material according to the present invention is preferably used in an air conditioner. The fin material according to the present invention is assured of excellent hydrophilic and antifouling properties as well as persistence of these properties, so that an air conditioner improved in the above-described problem such as reduction of cooling capacity can be provided. The air conditioner may be any of a room air conditioner, a packaged air conditioner, a car air conditioner and the like.
The heat exchanger and air conditioner of the present invention are not particularly limited, and known techniques (for example, JP-A-2002-106882 and JP-A-2002-156135) can be applied thereto.

### EXAMPLES

The present invention is described in detail below by referring to Examples, but the present invention is not limited thereto.

### <Example 1>

### <Preparation of Aerosol Hydrophilic Coating Solution (1)>

8 Gram of tetramethoxysilane (viscosity at 20°C: 0.8 mPa·s, produced by Tokyo Chemical Industry Co., Ltd.) and 0.5 g of a specific hydrophilic polymer (a hydrophilic polymer having a silane coupling group at the polymer terminal (Compound 1-1)) were mixed in 50 g of ethyl alcohol, 0.8 g of acetylacetone, 0.8 g of tetraethyl orthotitanate and 50 g of purified water, and the mixture was stirred at room temperature for 2 hours. Furthermore, 0.01 g of the following anionic surfactant (a 5 mass% aqueous solution) and 0.2 g of colloidal silica dispersion (a 20 mass% aqueous solution, trade name: Snowtex C, produced by Nissan Chemicals Industries, Ltd.) were added to prepare a hydrophilic coating solution. Thereafter, a fill gas (dimethyl ether) and the hydrophilic coating solution were filled in a volume ratio of 1/1 to prepare Aerosol Hydrophilic Coating Solution (1).

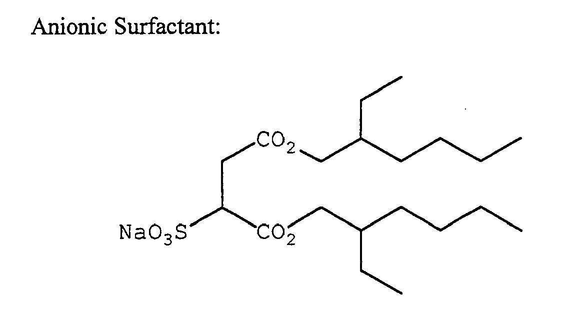

### <Examples 2 to 5>

Aerosol Hydrophilic Coating Solutions (2) to (5) were prepared in the same manner as in Example 1 except for changing the specific polymer to a hydrophilic polymer having a silane coupling group at the polymer terminal shown in Table 1 and changing tetramethoxysilane to tetraethoxysilane oligomer (viscosity at 20°C: 8 mPa·s, number (n) of tetraethoxysilane repeating units: n = about 10, trade name: Ethyl silicate 48, produced by Colcoat Co., Ltd.).

**Table 1**

| | Hydrophilic Polymer Having Silane Coupling Group at Polymer Terminal |
|---|---|
| Example 2 | Compound 1-1 |
| Example 3 | Compound 1-5 |
| Example 4 | Compound 1-8 |
| Example 5 | Compound 1-12 |

### <Example 6>

8 Gram of tetramethoxysilane (viscosity at 20°C: 0.8 mPa·s, produced by Tokyo Chemical Industry Co., Ltd.) and 0.5 g of a specific hydrophilic polymer (a hydrophilic polymer having a silane coupling group on the polymer side chain (Compound 1)) were mixed in 80 g of ethyl alcohol, 1.6 g of aluminum trisacetylacetonate (produced by Wako Pure Chemical Industries, Ltd.) and 20 g of purified water, and the mixture was stirred at room temperature for 2 hours. Furthermore, 0.01 g of the anionic surfactant shown above (a 5 mass% aqueous solution) and 0.2 g of colloidal silica dispersion (a 20 mass% aqueous solution, trade name: Snowtex C, produced by Nissan Chemicals Industries, Ltd.) were added to prepare a hydrophilic coating solution. Thereafter, a fill gas (dimethyl ether) and the hydrophilic coating solution were filled in a volume ratio of 1/1 to prepare Aerosol Hydrophilic Coating Solution (6).

### <Examples 7 to 10>

Aerosol Hydrophilic Coating Solutions (7) to (10) were prepared in the same manner as in Example 1 except for changing the specific polymer to a hydrophilic polymer having a silane coupling group on the polymer side chain shown in Table 2 and changing tetramethoxysilane to alkoxysilane oligomer produced by Colcoat Co., Ltd. shown in Table 2.

**Table 2**

| | Hydrophilic Polymer Having Silane Coupling Group in Polymer Side Chain | Alkoxysilane Oligomer |
|---|---|---|
| Example 7 | Compound 1 | Methyl Silicate 53A viscosity: 6.0 mPa·s (20°C) number (n) of tetramethoxysilane repeating units: n = about 7 |
| Example 8 | Compound 5 | Methyl Silicate 53A viscosity: 6.0 mPa·s (20°C) number (n) of tetramethoxysilane repeating units: n = about 7 |
| Example 9 | Compound 14 | Methyl Silicate 51 viscosity: 4.0 mPa·s (20°C) number (n) of tetramethoxysilane repeating units: n = about 4 |
| Example 10 | Compound 38 | Methyl Silicate 51 viscosity: 4.0 mPa·s (20°C) number (n) of tetramethoxysilane repeating units: n = about 4 |

### [Evaluation]

Each of the obtained aerosol hydrophilic coating solutions was spray-coated on a glass at room temperature (20°C) to form a hydrophilic member. The obtained hydrophilic member was naturally dried for 3 hours and subjected to following evaluations. The performance test results are shown in Table 3.

### Surface Free Energy:

Measured by the Zisman plotting method. A contact angle was measured under a room temperature condition by using aqueous magnesium chloride solutions differing in the concentration and when the surface tension of the aqueous solution is taken on the abscissa and the value obtained by reducing the contact angle into cos θ is taken on the ordinate, the surface tension giving cos θ=1, that is, contact angle=0°, is defined as the surface free energy. A hydrophilic layer having a surface free energy of 70 to 95 mN/m, preferably from 72 to 93 mN/m, more preferably from 75 to 90 mN/m, is excellent in the hydrophilicity and exhibits good performance.

### Antifouling Property:

A line was drawn with an oil-based ink (oil-based marker, produced by Mitsubishi Pencil Co., Ltd.), water was continuously splashed thereon, and whether or not the ink ran down was rated by sensory evaluation on a scale of three grades.
A: The ink comes off within one minute.
B: The ink comes off after a lapse of one minute.
C: The ink does not come off even when splashing of water is performed for more than 2 minutes and over 10 minutes.

### Water Resistance:

The hydrophilic member in a size of 120 cm² was rubbed by moving a sponge back and force 10 times in water, and the residual film ratio was determined from the change in the weight between before and after the treatment. A higher residual ratio indicates better water resistance.

Scratch Test:

A sapphire needle of 0.1 mm in diameter was scanned on the hydrophilic layer surface under a load by increasing the load from 5 g in steps of 5 g, and the load under which the surface was scratched (measured by a scratch strength tester, Type 185, manufactured by Shinto Scientific Co., Ltd.) was evaluated. Even if the load is large, when the surface is not scratched, the durability is good.

### <Example 11>

A hydrophilic member was formed by spray-coating Aerosol Hydrophilic Coating Solution (7) of Example 7 on a polyethylene terephthalate (PET) substrate (thickness: 50 µm) whose surface was hydrophilized by glow treatment. The performance test results are shown in Table 3.

### <Example 12>

A hydrophilic member was formed in the same manner as in Example 11 except for changing the substrate to an SUS substrate. The performance test results are shown in Table 3.

### <Example 13>

A hydrophilic member was formed in the same manner as in Example 11 except for changing the substrate to a float sheet glass having an undercoat layer described below. The performance test results are shown in Table 3.

### <Example 14>

0.5 Gram of a specific hydrophilic polymer (a hydrophilic polymer having a silane coupling group on the polymer side chain (Compound 2)) was mixed in 50 g of ethyl alcohol, 0.8 g of acetylacetone, 0.8 g of tetraethyl orthotitanate and 50 g of purified water, and the mixture was stirred at room temperature for 2 hours. Furthermore, 0.01 g of the anionic surfactant shown above (a 5 mass% aqueous solution) was added to prepare a hydrophilic coating solution. Thereafter, a fill gas (dimethyl ether) and the hydrophilic coating solution were filled in a volume ratio of 1/1 to prepare Aerosol Hydrophilic Coating Solution (14). Using Aerosol Hydrophilic Coating Solution (14), a hydrophilic member was formed by spray-coating it on a float sheet glass having an undercoat layer described below. The performance test results are shown in Table 3.

### [Float Sheet Glass Having Undercoat Layer]

A float sheet glass (thickness: 2 mm) that is a most general transparent sheet glass was prepared and after hydrophilizing the sheet glass surface by UV/O₃ treatment for 10 minutes, Coating Solution (1) having the following composition was spin-coated thereon and then dried in an oven at 100°C for 10 minutes to form an undercoat layer having a dry coverage of 1.0 g/m².

### <Coating Solution (1) for First Layer>

| | |
|---|---|
| Aqueous 20 mass% colloidal silica dispersion solution (Snowtex C, produced by Nissan Chemicals Industries, Ltd.) | 100 g |
| Sol-Gel Preparation Solution (2) described below | 500 g |
| A 5 mass% aqueous solution of anionic surfactant | 30 g |
| Purified water | 450 g |

### <Sol-Gel Preparation Solution (2)>

8 Gram of tetramethoxysilane (produced by Tokyo Chemical Industry Co., Ltd.) was mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation solution.

**Table 3**

| Example | Surface Free Energy | Antifouling Property | Water Resistance, Residual Film Ratio | Scratch Strength |
|---|---|---|---|---|
| Example 1 | 83 mN/m | A | 80% | 25 g |
| Example 2 | 84 mN/m | A | 85% | 35 g |
| Example 3 | 84 mN/m | A | 86% | 40 g |
| Example 4 | 81 mN/m | A | 85% | 35 g |
| Example 5 | 83 mN/m | A | 86% | 40 g |
| Example 6 | 84 mN/m | A | 90% | 50 g |
| Example 7 | 80 mN/m | A | 96% | 70 g |
| Example 8 | 80 mN/m | A | 97% | 75 g |
| Example 9 | 82 mN/m | A | 93% | 65 g |
| Example 10 | 83 mN/m | A | 92% | 60 g |
| Example 11 | 83 mN/m | A | 95% | 65 g |
| Example 12 | 83 mN/m | A | 95% | 70 g |
| Example 13 | 85 mN/m | A | 98% | 80 g |
| Example 14 | 78 mN/m | A | 79% | 20 g |

### <Example 15>

### <Preparation of Aerosol Hydrophilic Coating Solution (15)>

0.13 Gram of a specific hydrophilic polymer (A-1) (a hydrophilic polymer having a silane coupling group at the polymer terminal (Compound 1-1)) and 0.37 g of a specific hydrophilic polymer (A-2) (a hydrophilic polymer having a silane coupling group on the polymer side chain (Compound 2)) were mixed in 50 g of ethyl alcohol, 0.8 g of acetylacetone, 0.8 g of tetraethyl orthotitanate and 50 g of purified water, and the mixture was stirred at room temperature for 2 hours. Furthermore, 0.01 g of the anionic surfactant shown above (a 5 mass% aqueous solution) and 0.2 g of colloidal silica dispersion (a 20 mass% aqueous solution, trade name: Snowtex C, produced by Nissan Chemicals Industries, Ltd.) were added to prepare a hydrophilic coating solution. Thereafter, a fill gas (dimethyl ether) and the hydrophilic coating solution were filled in a volume ratio of 1/1 to prepare Aerosol Hydrophilic Coating Solution (15).

### <Comparative Example 1>

An aerosol hydrophilic coating solution was prepared in the same manner as in Example 15 except for changing the specific hydrophilic polymer (A-1) (a hydrophilic polymer having a silane coupling group at the polymer terminal (Compound 1-1)) to polyacrylamide.

### <Example 16>

### <Preparation of Aerosol Hydrophilic Coating Solution (16)>

Aerosol Hydrophilic Coating Solution (16) was prepared in the same manner as in Example 15 except for further adding 0.8 g of alkoxysilane oligomer (trade name: methyl silicate 53A, viscosity: 6.0 mPa·s (at 20°C)) produced by Colcoat Co., Ltd.

### <Examples 17 to 19>

Aerosol hydrophilic coating solutions were prepared in the same manner as in Example 16 except for changing the mixing ratio (A-1)/(A-2) between the specific hydrophilic polymer (A-1) (a hydrophilic polymer having a silane coupling group at the polymer terminal) and the specific hydrophilic polymer (A-2) (a hydrophilic polymer having a silane coupling group on the polymer side chain) as shown in Table 4.

**Table 4**

| | (A-1)/(A-2) |
|---|---|
| Example 17 | 10/90 |
| Example 18 | 20/80 |
| Example 19 | 40/60 |

### [Evaluation]

Each of the obtained aerosol hydrophilic coating solutions was spray-coated on a glass at room temperature (20°C) to form a hydrophilic member. The obtained hydrophilic member was naturally dried for 3 hours and evaluated.

**Table 5**

| Example | Surface Free Energy | Antifouling Property | Water Resistance, Residual Film Ratio | Scratch Strength |
|---|---|---|---|---|
| Example 15 | 83 mN/m | A | 80 % | 25 g |
| Example 16 | 84 mN/m | A | 90 % | 35 g |
| Example 17 | 84 mN/m | A | 92 % | 40 g |
| Example 18 | 81 mN/m | A | 89 % | 35 g |
| Example 19 | 83 mN/m | A | 88 % | 40 g |
| Comparative Example 1 | 79 mN/m | C | 45 % | 15 g |

### <Examples 20 to 27>

Aerosol Hydrophilic Coating Solutions (20) to (27) were prepared in the same manner as in Example 1 except for changing tetramethoxysilane to tetraethoxysilane oligomer having a viscosity and the number of repeating units shown in Table 6. Each of the obtained aerosol hydrophilic coating solutions was spray-coated in the same manner as in Example 1 and evaluated. Aerosol Hydrophilic Coating Solutions (26) and (27) could not be coated, because the stability of the coating solution was bad and liquid clogging was generated at the spray jetting part. The performance test results are shown in Table 8.

**Table 6**

| | Tetraethoxysilane Oligomer |
|---|---|
| Example 20 | viscosity: 1.0 mPa·s (20°C) |
| | number (n) of tetramethoxysilane repeating units: n = about 3 |
| Example 21 | viscosity: 2.0 mPa·s (20°C) |
| | number (n) of tetramethoxysilane repeating units: n = about 4 |
| Example 22 | viscosity: 3.0 mPa·s (20°C) |
| | number (n) of tetramethoxysilane repeating units: n = about 5 |
| Example 23 | viscosity: 10.0 mPa·s (20°C) |
| | number (n) of tetramethoxysilane repeating units: n = about 12 |
| Example 24 | viscosity: 12.0 mPa·s (20°C) |
| | number (n) of tetramethoxysilane repeating units: n = about 14 |
| Example 25 | viscosity: 15.0 mPa·s (20°C) |
| | number (n) of tetramethoxysilane repeating units: n = about 16 |
| Example 26 | viscosity: 16.0 mPa·s (20°C) |
| | number (n) of tetramethoxysilane repeating units: n = about 17 |
| Example 27 | viscosity: 20.0 mPa·s (20°C) |
| | number (n) of tetramethoxysilane repeating units: n = about 25 |

### <Examples 28 to 35>

Aerosol Hydrophilic Coating Solutions (28) to (35) were prepared in the same manner as in Example 6 except for changing the specific hydrophilic polymer to a hydrophilic polymer having a silane coupling group on the polymer side chain (Compound 51) and changing tetramethoxysilane to tetraethoxysilane oligomer having a viscosity and the number of repeating units shown in Table 7. Each of the obtained aerosol hydrophilic coating solutions was spray-coated in the same manner as in Example 1 and evaluated. Aerosol Hydrophilic Coating Solutions (34) and (35) could not be coated, because the stability of the coating solution was bad and liquid clogging was generated at the spray jetting part. The performance test results are shown in Table 8.

**Table 7**

| | Tetraethoxysilane Oligomer |
|---|---|
| Example 28 | viscosity: 1.0 mPa·s (20°C) |
| | number (n) of tetramethoxysilane repeating units: n = about 3 |
| Example 29 | viscosity: 2.0 mPa·s (20°C) |
| | number (n) of tetramethoxysilane repeating units: n = about 4 |
| Example 30 | viscosity: 3.0 mPa·s (20°C) |
| | number (n) of tetramethoxysilane repeating units: n = about 5 |
| Example 31 | viscosity: 10.0 mPa·s (20°C) |
| | number (n) of tetramethoxysilane repeating units: n = about 12 |
| Example 32 | viscosity: 12.0 mPa·s (20°C) |
| | number (n) of tetramethoxysilane repeating units: n = about 14 |
| Example 33 | viscosity: 15.0 mPa·s (20°C) |
| | number (n) of tetramethoxysilane repeating units: n = about 16 |
| Example 34 | viscosity: 16.0 mPa·s (20°C) |
| | number (n) of tetramethoxysilane repeating units: n = about 17 |
| Example 35 | viscosity: 20.0 mPa·s (20°C) |
| | number (n) of tetramethoxysilane repeating units: n = about 25 |

### <Comparative Example 2>

Aerosol Hydrophilic Coating Solution (23') was prepared in the same manner as in Example 23 except for changing the specific hydrophilic polymer to Comparative Polymer (1) shown below. The obtained aerosol hydrophilic coating solutions was spray-coated in the same manner as in Example 1 and evaluated.

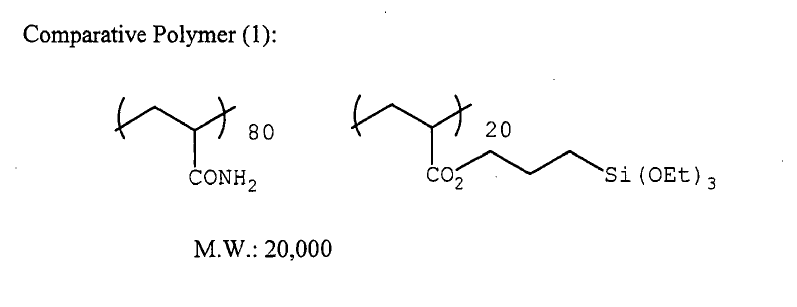

**Table 8**

| Example | Surface Free Energy | Antifouling Property | Water Resistance, Residual Film Ratio | Scratch Strength |
|---|---|---|---|---|
| Example 20 | 82 mN/m | A | 82% | 25 g |
| Example 21 | 83 mN/m | A | 84% | 30 g |
| Example 22 | 84 mN/m | A | 86% | 35 g |
| Example 23 | 84 mN/m | A | 89% | 50 g |
| Example 24 | 81 mN/m | A | 90% | 55 g |
| Example 25 | 83 mN/m | A | 92% | 60 g |
| Example 26 | Evaluation was impossible. | | | |
| Example 27 | | | | |
| Example 28 | 81 mN/m | A | 89% | 50 g |
| Example 29 | 82 mN/m | A | 93% | 60 g |
| Example 30 | 83 mN/m | A | 95% | 70 g |
| Example 31 | 83 mN/m | A | 98% | 100 g |
| Example 32 | 80 mN/m | A | 100% | 110 g |
| Example 33 | 82 mN/m | A | 100% | 120 g |
| Example 34 | Evaluation was impossible. | | | |
| Example 35 | | | | |
| Comparative Example 2 | 70 mN/m | C | 89% | 50 g |

### <Example 36>

8 Gram of tetramethoxysilane (viscosity at 20°C: 0.8 mPa·s, produced by Tokyo Chemical Industry Co., Ltd.) and 0.5 g of a specific hydrophilic polymer (a hydrophilic polymer having a silane coupling group at the polymer terminal (Compound 1-1)) were mixed in 50 g of ethyl alcohol, 0.8 g of acetylacetone, 0.8 g of tetraethyl orthotitanate and 50 g of purified water, and the mixture was stirred at room temperature for 2 hours. Furthermore, 0.01 g of the anionic surfactant shown above (a 5 mass% aqueous solution) and 0.2 g of colloidal silica dispersion (a 20 mass% aqueous solution, trade name: Snowtex C, produced by Nissan Chemicals Industries, Ltd.) were added to prepare Hydrophilic Coating Solution (36). The obtained Hydrophilic Coating Solution (1) was charged into a dispenser pump spray container, then spray-coated in the same manner as in Example 1 and evaluated. The performance test results are shown in Table 12.

### <Examples 37 to 44>

Hydrophilic Coating Solutions (37) to (44) were prepared in the same manner as in Example 1 except for changing tetramethoxysilane to tetraethoxysilane oligomer having a viscosity and the number of repeating units shown in Table 9, and each coating solution was charged into a dispenser pump spray, spray-coated in the same manner as in Example 36 and evaluated. Hydrophilic Coating Solutions (43) and (44) could not be coated, because the stability of the coating solution was bad and liquid clogging was generated at the spray jetting part. The performance test results are shown in Table 12.

**Table 9**

| | Tetraethoxysilane Oligomer |
|---|---|
| Example 37 | viscosity: 1.0 mPa·s (20°C) |
| | number (n) of tetramethoxysilane repeating units: n = about 3 |
| Example 38 | viscosity: 2.0 mPa·s (20°C) |
| | number (n) of tetramethoxysilane repeating units: n = about 4 |
| Example 39 | viscosity: 3.0 mPa·s (20°C) |
| | number (n) of tetramethoxysilane repeating units: n = about 5 |
| Example 40 | viscosity: 10.0 mPa·s (20°C) |
| | number (n) of tetramethoxysilane repeating units: n = about 12 |
| Example 41 | viscosity: 12.0 mPa·s (20°C) |
| | number (n) of tetramethoxysilane repeating units: n = about 14 |
| Example 42 | viscosity: 15.0 mPa·s (20°C) |
| | number (n) of tetramethoxysilane repeating units: n = about 16 |
| Example 43 | viscosity: 16.0 mPa·s (20°C) |
| | number (n) of tetramethoxysilane repeating units: n = about 17 |
| Example 44 | viscosity: 20.0 mPa·s (20°C) |
| | number (n) of tetramethoxysilane repeating units: n = about 25 |

### <Example 45 to 52>

Hydrophilic Coating Solutions (45) to (52) were prepared in the same manner as in Example 36 except for changing the specific hydrophilic polymer to a hydrophilic polymer having a silane coupling group on the polymer side chain (Compound 51) and changing tetramethoxysilane to tetraethoxysilane oligomer having a viscosity and the number of repeating units shown in Table 10, and each coating solution was charged into a dispenser pump spray container, spray-coated in the same manner as in Example 36 and evaluated. Aerosol Hydrophilic Coating Solutions (51) and (52) could not be coated, because the stability of the coating solution was bad and liquid clogging was generated at the spray jetting part. The performance test results are shown in Table 12.

**Table 10**

| | Tetraethoxysilane Oligomer |
|---|---|
| Example 45 | viscosity: 1.0 mPa·s (20°C) |
| | number (n) oftetramethoxysilane repeating units: n = about 3 |
| Example 46 | viscosity: 2.0 mPa·s (20°C) |
| | number (n) of tetramethoxysilane repeating units: n = about 4 |
| Example 47 | viscosity: 3.0 mPa·s (20°C) |
| | number (n) of tetramethoxysilane repeating units: n = about 5 |
| Example 48 | viscosity: 10.0 mPa·s (20°C) |
| | number (n) of tetramethoxysilane repeating units: n = about 12 |
| Example 49 | viscosity: 12.0 mPa·s (20°C) |
| | number (n) of tetramethoxysilane repeating units: n = about 14 |
| Example 50 | viscosity: 15.0 mPa·s (20°C) |
| | number (n) of tetramethoxysilane repeating units: n = about 16 |
| Example 51 | viscosity: 16.0 mPa·s (20°C) |
| | number (n) of tetramethoxysilane repeating units: n = about 17 |
| Example 52 | viscosity: 20.0 mPa·s (20°C) |
| | number (n) of tetramethoxysilane repeating units: n = about 25 |

### <Comparative Example 3>

Hydrophilic Coating Solution (45') was prepared in the same manner as in Example 45 except for changing the specific hydrophilic polymer to Comparative Polymer (1) shown below, and charged into a dispenser pump spray container.

The coating solution was spray-coated in the same manner as in Example 36 and evaluated. The performance test results are shown in Table 12.

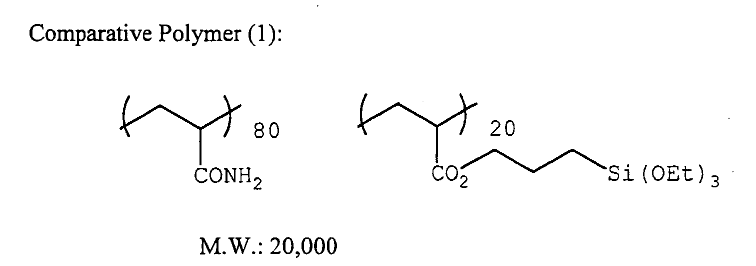

### <Example 53>

12 Gram of a specific hydrophilic polymer (A-1) (a hydrophilic polymer having a silane coupling group at the polymer terminal (Compound 1-1)) and 37 g of a specific hydrophilic polymer (A-2) (a hydrophilic polymer having a silane coupling group on the polymer side chain (Compound 2)) were mixed in 9 g of ethyl alcohol, 0.4 g of acetylacetone, 0.5 g of tetraethyl orthotitanate and 400 g of purified water, and the mixture was stirred at room temperature for 2 hours. Furthermore, 10 g of the anionic surfactant shown above (a 5 mass% aqueous solution) and 500 g of purified water were added to prepare Hydrophilic Coating Solution (53). The obtained Hydrophilic Coating Solution (53) was charged into a dispenser pump spray container, then spray-coated in the same manner as in Example 36 and evaluated. The performance test results are shown in Table 12.

### <Examples 54 to 56>

Hydrophilic Coating Solution (53) was prepared in the same manner as in Example 53 except for changing the mixing ratio (A-1)/(A-2) between the specific hydrophilic polymer (A-1) (a hydrophilic polymer having a silane coupling group at the polymer terminal (Compound 1-1)) and the specific hydrophilic polymer (A-2) (a hydrophilic polymer having a silane coupling group on the polymer side chain (Compound 2)) as shown in Table 11, and the coating solution was charged into a dispenser pump spray container, then spray-coated in the same manner as in Example 36 and evaluated. The performance test results are shown in Table 12.

**Table 11**

| | (A-1)/(A-2) |
|---|---|
| Example 54 | 10/90 |
| Example 55 | 20/80 |
| Example 56 | 40/60 |

**Table 12**

| Example | Surface Free Energy | Antifouling Property | Water Resistance, Residual Film Ratio | Scratch Strength |
|---|---|---|---|---|
| Example 36 | 83 mN/m | A | 80% | 25 g |
| Example 37 | 82 mN/m | A | 82% | 25 g |
| Example 38 | 83 mN/m | A | 84% | 30 g |
| Example 39 | 84 mN/m | A | 86% | 35 g |
| Example 40 | 84 mN/m | A | 89% | 50 g |
| Example 41 | 81 mN/m | A | 90% | 55 g |
| Example 42 | 83 mN/m | A | 92% | 60 g |
| Example 43 | Evaluation was impossible. | | | |
| Example 44 | | | | |
| Example 45 | 81 mN/m | A | 89% | 50 g |
| Example 46 | 82 mN/m | A | 93% | 60 g |
| Example 47 | 83 mN/m | A | 95% | 70 g |
| Example 48 | 83 mN/m | A | 98% | 100 g |
| Example 49 | 80 mN/m | A | 100% | 110 g |
| Example 50 | 82 mN/m | A | 100% | 120 g |
| Example 51 | Evaluation was impossible. | | | |
| Example 52 | | | | |
| Example 53 | 83 mN/m | A | 92% | 55 g |
| Example 54 | 81 mN/m | A | 95% | 65 g |
| Example 55 | 82 mN/m | A | 94% | 60 g |
| Example 56 | 84 mN/m | A | 91% | 50 g |
| Comparative Example 3 | 70 mN/m | C | 89% | 50 g |

### INDUSTRIAL APPLICABILITY

The composition for forming a hydrophilic film, the spray composition and the hydrophilic member provided with the composition by spray coating of the present invention can provide a composition for forming a hydrophilic film, and a hydrophilic member, ensuring that a hydrophilic coating excellent in durability, antifouling property, water resistance and the like can be easily formed while keeping hydrophilicity and the coating workability is excellent. The composition for forming a hydrophilic film and the hydrophilic member can be applied to various materials such as member for air conditioners, glass, lens, mirror, exterior material and water supply-related member.

While the invention has been described in detail and with reference to specific embodiments thereof, it will be apparent to one skilled in the art that various changes and modifications can be made therein without departing from the spirit and scope thereof.
This application is based on Japanese Patent Application (Japanese Patent Application No. 2007-212695) filed on August 17, 2007 and Japanese Patent Application (Japanese Patent Application No. 2008-79322) filed on March 25, 2008, the contents of which are incorporated herein by way of reference.

## Claims

1. A composition for forming a hydrophilic film, comprising following components (A) and (B):
(A) a hydrophilic polymer having a silane coupling group at a terminal or on a side chain of the polymer; and
(B) a metal complex catalyst.

2. A spray composition comprising the components (A) and (B).

3. The composition according to claim 1 or 2, wherein the composition for forming a hydrophilic film further comprises:
(C) at least one of an alkoxide compound containing an element selected from Si, Ti, Zr and Al and a partial hydrolysis condensate thereof.

4. The composition according to claim 3,
wherein a viscosity of the (C) at least one of an alkoxide compound containing an element selected from Si, Ti, Zr and Al and a partial hydrolysis condensate thereof is 2 mPa·s or more at 20°C.

5. The composition according to any one of claims 1 to 4,
wherein (A) the hydrophilic polymer having a silane coupling group at the terminal or on the side chain of the polymer is at least one of
(A-1) a hydrophilic polymer having a structural unit represented by following formula (ii) and having a partial structure represented by following formula (i) at a terminal of the polymer chain; and
(A-2) a hydrophilic polymer having a structural unit represented by following formula (iii) and a structural unit represented by following formula (iv): 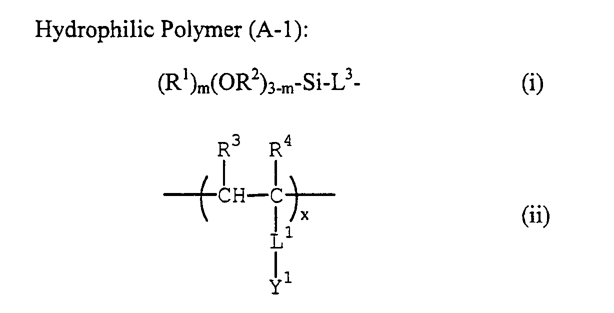 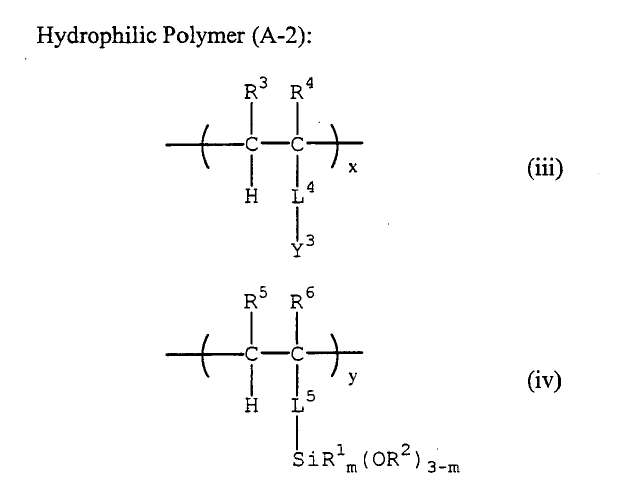 wherein R¹, R², R³, R⁴, R⁵ and R⁶ each independently represents a hydrogen atom or a hydrocarbon group having a carbon number of 1 to 8;
m represents 0, 1 or 2;
x and y define a compositional ratio, x is 0<x<100, y is 0<y<100;
L¹, L³ and L⁴ each independently represents a single bond or an organic linking group;
L⁵ represents a single bond or a polyvalent organic linking group having one or more structures selected from the group consisting of -CONH-, -NHCONH-, -OCONH-, - SO₂NH- and -SO₃-; and
Y¹ and Y³ each independently represents -OH, -ORₐ, -CORₐ, - CO₂Rₑ, -CON(Rₐ)(R_{b}), -N(Rₐ)(R_{b}), -NHCOR_{d}, - NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, - SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or-PO₃(R_{d})(Rₑ),
wherein Rₐ, R_{b} and R_{c} each independently represents a hydrogen atom or a linear, branched or cyclic alkyl group; R_{d} represents a linear, branched or cyclic alkyl group; Rₑ and R_{f} each independently represents a hydrogen atom, a linear, branched or cyclic alkyl group, an alkali metal, an alkaline earth metal or an onium; and Rg represents a linear, branched or cyclic alkyl group, a halogen atom, an inorganic anion or an organic anion.

6. The composition according to any one of claims 1 to 5,
wherein (B) the metal complex catalyst is composed of a metal element selected from Groups 2A, 3B, 4A and 5A of the Periodic Table and an oxo or hydroxyoxygen compound selected from a β-diketone, a ketoester, a hydroxycarboxylic acid or an ester thereof, an aminoalcohol and an enolic active hydrogen compound.

7. The composition according to any one of claims 1 to 6, further comprising:
(D) a colloidal silica.

8. A hydrophilic member in which the composition according to any one of claims 1 to 7 is applied to a substrate by a spray coating.

9. The composition according to any one of claims 1 to 7,
wherein the composition for forming a hydrophilic film, comprises the hydrophilic polymer (A-1) and the hydrophilic polymer (A-2), and
a mass ratio (hydrophilic polymer (A-1)/hydrophilic polymer (A-2)) between the hydrophilic polymer (A-1) and the hydrophilic polymer (A-2) is from 50/50 to 5/95.

10. A hydrophilic member in which the composition according to claim 9 is applied by a spray coating.

11. A fin material coated with the composition according to any one of claims 1 to 7.

12. An aluminum-made fin material, wherein the fin material according to claim 11 is made of aluminum.

13. A heat exchanger using the aluminum-made fin material according to claim 12.

14. An air conditioner using the heat exchanger according to claim 13.
